# EUROPEAN PATENT SPECIFICATION

(11) **EP 3 876 139 B1**
(45) Date of publication and mention of the grant of the patent: **10.01.2024**
(21) Application number: 18940843.8
(22) Date of filing: 20.11.2018
(51) Int. Cl.: G06T 7/00, G06T 7/11, G06T 7/12, G06T 7/136, G06T 7/521, G06T 7/579, G06V 10/25, G06V 10/82, G06V 20/20, G06V 10/94, G06T 7/571

(54) **METHOD FOR ESTIMATING OBJECT PARAMETERS AND ELECTRONIC DEVICE**
VERFAHREN ZUR SCHÄTZUNG VON OBJEKTPARAMETERN UND ELEKTRONISCHE VORRICHTUNG
PROCÉDÉ D'ESTIMATION DE PARAMÈTRES D'OBJET ET DISPOSITIF ÉLECTRONIQUE

(43) Date of publication of application: 08.09.2021
(73) Proprietor: Huawei Technologies Co., Ltd., Longgang District Shenzhen, Guangdong 518129 (CN)
(72) Inventor: MIAO, Dan, Shenzhen, Guangdong 518129 (CN); ZHANG, Xu, Shenzhen, Guangdong 518129 (CN)
(74) Representative: Maiwald GmbH
(86) International application number: PCT/CN2018/116554
(87) International publication number: WO 2020/103001

(56) References cited:
- KUHAD PALLAVI ET AL: "Using distance estimation and deep learning to simplify calibration in food calorie measurement", 2015 IEEE INTERNATIONAL CONFERENCE ON COMPUTATIONAL INTELLIGENCE AND VIRTUAL ENVIRONMENTS FOR MEASUREMENT SYSTEMS AND APPLICATIONS (CIVEMSA), IEEE, 12 June 2015 (2015-06-12), pages 1-6, XP033175986, DOI: 10.1109/CIVEMSA.2015.7158594 [retrieved on 2015-07-14]
- POULADZADEH PARISA ET AL: "You are what you eat: So measure what you eat!", IEEE INSTRUMENTATION & MEASUREMENT MAGAZINE, IEEE SERVICE CENTER, PISCATAWAY, NJ, US, vol. 19, no. 1, 1 February 2016 (2016-02-01), pages 9-15, XP011595875, ISSN: 1094-6969, DOI: 10.1109/MIM.2016.7384954 [retrieved on 2016-01-18]

## Description

### TECHNICAL FIELD

Embodiments of this application relate to the field of electronic technologies, and in particular, to a method for estimating an object parameter and an electronic device.

### BACKGROUND

With the improvement of living standards, unhealthy manifestations such as obesity are more common in people's daily lives, making people more concerned about impact of calories ingested in daily meals on the body. Both a service provider and a user hope to provide advice and assistance for the user's diet by measuring calories of food during the daily diet, so as to help the user to maintain a good diet habit.

The prior art provides methods for measuring calories in contact and contactless manners. In a method for measuring calories in a contact manner, usually a weight of food is directly measured by using a tool such as an electronic scale, and then a user manually selects a category of the food to calculate values of calories and nutrient element content. This method provides accurate measurement, but is inconvenient for the user. In a method for measuring calories in a contactless manner, usually after a user takes a picture of food by using an electronic device such as a mobile phone or a camera, the electronic device identifies a category of the food in the picture, and reminds the user of an empirical value of a calorie value included in each 100 grams of food of this category. Although it is convenient for the user to use the method for measuring calories in a contactless manner, the user cannot obtain actual calories in the food. How to measure a food parameter conveniently and accurately becomes an urgent problem to be resolved.
D1(XP033175986) discloses a paper about food calorie measurement. In this paper, we (researchers) consider the category of those tools that use image processing to recognize the food, and we propose a method for fully automatic and user-friendly calibration of the dimension of the food portion sizes, which is needed in order to measure food portion weight and its ensuing amount of calories. Experimental results show that our method, which uses deep learning, mobile cloud computing, distance estimation and size calibration inside a mobile device, leads to an accuracy improvement to 95 percent on average compared to previous work.

### SUMMARY

In view of this, this application provides a method for estimating an object parameter and an electronic device, so that accuracy of detecting an object parameter can be improved while a user can conveniently detect a food parameter.

The invention and its scope of protection is defined by the appended independent claims. Claim 1 defines a method for estimating an object parameter. Claim 8 defines a mobile phone. Claim 9 defines a computer storage medium. Claim 10 defines a computer program product. The following aspects and implementations of the disclosure provide examples of how technical subject matters can be combined one with the other.

According to a first unclaimed aspect, a method for estimating an object parameter is provided, where the method is applied to an electronic device having a touchscreen and a camera, and the method includes: detecting a first operation of a user; starting the camera and collecting first information of a first target object in response to the first operation; determining a category of the first target object based on the first information; determining a target parameter of the first target object based on the category and second information of the first target object; and displaying the category of the first target object and one or more parameters of the target parameter on the touchscreen, where the one or more parameters include mass.

In some possible implementations, when the category of the first target object and a plurality of parameters in the target parameter are displayed on the touchscreen, the plurality of parameters further include energy and/or a nutrient element, and the like.

In this embodiment of this application, the category of the first target object may be further understood as an actual category of the object. For example, the first target object is an apple, and the category of the first target object is apple.

In a possible implementation, the determining a category of the first target object based on the first information includes: The electronic device can extract the first information of the first target object by using the camera based on information such as a color, a shape, or a surface feature of the first target object, and then search a locally stored feature database according to the first information, so as to determine the category of the first target object.

According to the method for estimating an object parameter in this embodiment of this application, a category of an object is determined, and a target parameter of the object is determined by using the category and second information, where the target parameter includes a mass parameter. This facilitates detection of a food parameter by a user, and helps improve accuracy of parameter detection.

With reference to the first aspect, in some implementations of the first aspect, the determining a target parameter of the first target object based on the category and second information of the first target object includes: determining, by using pre-stored information or a pre-stored augmented reality AR model, the target parameter that matches the category and the second information of the first target object.

In some possible implementations, the second information is an AR three-dimensional model of the first target object collected by using the camera. The electronic device may determine an estimated volume of the first target object by using the three-dimensional model, calculate the mass of the first target object by using density, and determine the target parameter by using parameter information of a unit of the first target object.

With reference to the first aspect, in some implementations of the first aspect, the pre-stored information is a mapping relationship, and before the target parameter of the first target object is determined, the method further includes: determining a correspondence among a category, an area, a depth, and a parameter of at least one object; and determining the mapping relationship based on the correspondence among the category, the area, the depth, and the parameter of the at least one object.

In some possible implementations, the correspondence among the category, the area, the depth, and the parameter of the at least one object includes: a proportional relationship between the area and the depth of the at least one object when the at least one object has a same category and a same parameter.

In some possible implementations, the area and the depth of the object are in a linear or non-linear relationship.

In some possible implementations, the area and the depth of the object are inversely proportional, and the photographing distance and the area are in a -2 power relationship.

According to the method for estimating an object parameter in this embodiment of this application, the electronic device may pre-store the mapping relationship among the category, the area, the depth, and the parameter of the at least one object, and search, by using the pre-stored mapping relationship, for the target parameter that matches the current to-be-measured first target object, thereby helping improve accuracy of measuring an object parameter.

With reference to the first aspect, in some implementations of the first aspect, the method further includes: determining, based on a heat map of the first target object, the area of the first target object in the image collected by the camera.

In some possible implementations, the electronic device may determine a heat map of the image collected by the camera, and determine the area of the first target object by using the heat map.

With reference to the first aspect, in some implementations of the first aspect, the method further includes: reminding the user to input mass of the first target object; detecting a second operation that the user inputs the mass of the first target object; and determining the mass of the first target object in response to the second operation; where the determining a target parameter of the first target object based on the category and second information of the first target object includes: determining the target parameter of the first target object based on the category of the first target object and the mass of the first target object.

According to the method for estimating an object parameter in this embodiment of this application, by reminding the user to input the mass of the to-be-measured object, an error in a process of measuring the mass by the electronic device can be avoided, thereby improving accuracy of measuring an object parameter.
With reference to the first aspect, in some implementations of the first aspect, the determining a target parameter of the first target object includes: determining that the category of the first target object is a first category; where the method further includes: reminding the user to determine whether the first category is accurate; when it is detected that the user determines that the first category is inaccurate, reminding the user to input the category of the first target object; detecting a third operation that the user inputs a second category of the first target object; and determining the second category as the category of the first target object in response to the third operation.

In the method for estimating an object parameter in this embodiment of this application, when detecting the category of the to-be-measured object, the electronic device may remind the user of the detected category of the to-be-measured object, which helps the user determine whether the category detected by the mobile phone is accurate. When the detection is inaccurate, the mobile phone may continue to perform detection or an accurate category is manually input, which helps avoid inaccurate subsequent parameter measurement due to a category detection error.

With reference to the first aspect, in some implementations of the first aspect, the displaying the category of the first target object and one or more parameters of the target parameter on the touchscreen includes: displaying one or more parameters of the target parameter on the touchscreen based on the category of the object.

In the method for estimating an object parameter in this embodiment of this application, the electronic device may classify objects of a plurality of categories in advance, and the user may learn, in a timely manner, parameter information corresponding to the objects of the categories, which helps improve user experience.

In some possible implementations, an object collected by the camera includes the first target object and a second target object, and before the displaying the category of the first target object and one or more parameters of the target parameter on the touchscreen, the method further includes: detecting a fourth operation that the user taps the first target object; and in response to the fourth operation, determining to detect the target parameter of the first target object.

In some possible implementations, an object collected by the camera includes the first target object and a second target object, and after the displaying the category of the first target object and one or more parameters of the target parameter on the touchscreen, the method further includes: detecting a fifth operation of the user; in response to the fifth operation, starting the camera and collecting third information of the second target object; determining a category of the second target object based on the third information; determining a target parameter of the second target object based on the category and fourth information of the second target object; and displaying the category of the second target object and one or more parameters of the target parameter on the touchscreen, where the one or more parameters include mass.

In some possible implementations, an object collected by the camera includes the first target object and a second target object, and before the displaying the category of the first target object and one or more parameters of the target parameter on the touchscreen, the method further includes: detecting a fifth operation of the user; in response to the fifth operation, starting the camera and collecting third information of the second target object; determining a category of the second target object based on the third information; determining a target parameter of the second target object based on the category and fourth information of the second target object; and displaying the category of the first target object, the category of the second target object, and corresponding one or more parameters of the target parameter on the touchscreen.

In some possible implementations, the electronic device displays, on the touchscreen, the category of the first target object and the category of the second target object, and a sum of the target parameters of the first target object and the second target object.

In some possible implementations, before the displaying the category of the first target object and one or more parameters of the target parameter on the touchscreen, the method further includes: detecting a sixth operation of the user; displaying a first window on the touchscreen in response to the sixth operation, where the first window includes one or more parameters used to remind the user to select the target parameter that needs to be detected; detecting a seventh operation used by the user to select the target parameter; and determining, in response to the seventh operation, to detect the one or more parameters of the first target object.

In some possible implementations, the detecting a first operation of the user includes: detecting the first operation that the user taps a first control. The first control is located on a desktop of the electronic device, a camera interface of the electronic device, a lock screen of the electronic device, or a local search interface of the electronic device.

According to a second aspect, a method for estimating an object parameter is provided, where the method is applied to an electronic device having a touchscreen and a camera, and the method includes: detecting a first operation of a user; starting the camera and collecting a first target object in response to the first operation; and detecting and displaying a category of the first target object and one or more parameters of a target parameter of the first target object on the touchscreen, where the one or more parameters include mass.

With reference to the second aspect, in some implementations of the second aspect, when the category of the first target object and a plurality of parameters of the target parameter of the first target object are displayed on the touchscreen, the plurality of parameters further include energy and/or nutrient element content of the first target object.

With reference to the second aspect, in some implementations of the second aspect, before the displaying a category of the first target object and one or more parameters of a target parameter of the first target object on the touchscreen, the method further includes: reminding the user to input the category of the first target object; detecting a second operation that the user inputs the first target object; and determining the category of the first target object in response to the second operation.

With reference to the second aspect, in some implementations of the second aspect, before the displaying a category of the first target object and one or more parameters of a target parameter of the first target object on the touchscreen, the method further includes: reminding the user to input mass of the first target object; detecting a third operation that the user inputs the mass of the first target object; and determining the mass of the first target object in response to the third operation.

According to a third aspect, this technical solution provides an apparatus for estimating an object parameter. The apparatus is included in an electronic device, and the apparatus has a function of implementing behavior of the electronic device in the foregoing aspects and the possible implementations of the foregoing aspects. The function may be implemented by hardware, or may be implemented by corresponding software executed by hardware. The hardware or the software includes one or more modules or units corresponding to the function.

According to a fourth aspect, this technical solution provides an electronic device, including a touchscreen, where the touchscreen includes a touch-sensitive surface and a display, a camera, one or more processors, a memory, a plurality of applications, and one or more computer programs, where the one or more computer programs are stored in the memory, the one or more computer programs include an instruction, and when the instruction is executed by the electronic device, the electronic device is enabled to perform the method for estimating an object parameter in any possible implementation of any one of the foregoing aspects.

According to a fifth aspect, this technical solution provides an electronic device, including one or more processors and one or more memories, where the one or more memories are coupled to the one or more processors, the one or more memories are configured to store computer program code, the computer program code includes a computer instruction, and when the one or more processors execute the computer instruction, the electronic device is enabled to perform the method for estimating an object parameter in any possible implementation of any one of the foregoing aspects.

According to a sixth aspect, this technical solution provides a computer storage medium, including a computer instruction, where when the computer instruction runs on an electronic device, the electronic device is enabled to perform the method for estimating an object parameter in any possible implementation of any one of the foregoing aspects.

According to a seventh aspect, this technical solution provides a computer program product, where when the computer program product runs on an electronic device, the electronic device is enabled to perform the method for estimating an object parameter in any possible design of any one of the foregoing aspects.

### BRIEF DESCRIPTION OF DRAWINGS

FIG. 1A and FIG. 1B are a schematic diagram of a hardware structure of an electronic device according to an embodiment of this application;
FIG. 2 is a schematic diagram of a software structure of an electronic device according to an embodiment of this application;
FIG. 3A and FIG. 3B are a schematic diagram of a group of display interfaces according to an embodiment of this application;
FIG. 4A and FIG. 4B are a schematic diagram of another group of display interfaces according to an embodiment of this application;
FIG. 5A, FIG. 5B and FIG. 5C are a schematic diagram of another group of display interfaces according to an embodiment of this application;
FIG. 6 is a schematic diagram of another group of display interfaces according to an embodiment of this application;
FIG. 7A and FIG. 7B are a schematic diagram of another group of display interfaces according to an embodiment of this application;
FIG. 8A and FIG. 8B are a schematic diagram of a group of images according to an embodiment of this application;
FIG. 9A and FIG. 9B are a schematic diagram of a group of display interfaces according to an embodiment of this application;
FIG. 10 is a schematic diagram of another group of display interfaces according to an embodiment of this application;
FIG. 11 is a schematic diagram of another group of display interfaces according to an embodiment of this application;
FIG. 12A and FIG. 12B are a schematic diagram of another group of display interfaces according to an embodiment of this application; and
FIG. 13A and FIG. 13B are a schematic diagram of another group of display interfaces according to an embodiment of this application; and
FIG. 14 is a schematic diagram of another group of display interfaces according to an embodiment of this application;
FIG. 15 is a schematic diagram of another group of display interfaces according to an embodiment of this application;
FIG. 16 is a schematic diagram of another group of display interfaces according to an embodiment of this application;
FIG. 17 is a schematic diagram of another group of display interfaces according to an embodiment of this application;
FIG. 18 is a schematic diagram of determining a category and a parameter of a to-be-measured object according to an embodiment of this application;
FIG. 19 is a schematic diagram of a process of obtaining a mask region and laser ranging according to an embodiment of this application;
FIG. 20 is a schematic diagram of a process of obtaining a parameter of a to-be-measured object according to an embodiment of this application;
FIG. 21 is a schematic diagram of a relationship between a depth and an area corresponding to an apple according to an embodiment of this application;
FIG. 22 is a schematic structural diagram of a parameter measurement system according to an embodiment of this application;
FIG. 23 is a schematic flowchart of a parameter measurement process according to an embodiment of this application;
FIG. 24 is a schematic flowchart of a method for estimating an object parameter according to an embodiment of this application;
FIG. 25 is another schematic flowchart of a method for estimating an object parameter according to an embodiment of this application; and
FIG. 26 is a schematic block diagram of an apparatus for estimating an object parameter according to an embodiment of this application.

### DESCRIPTION OF EMBODIMENTS

The following describes the technical solutions in the embodiments of this application with reference to the accompanying drawings in the embodiments of this application. In description of the embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in the embodiments of this application, "a plurality of" means two or more than two.

The following terms "first" and "second" are merely intended for a purpose of description, and shall not be understood as an indication or implication of relative importance or implicit indication of the number of indicated technical features. Therefore, a feature limited by "first" or "second" may explicitly or implicitly include one or more features. In the description of the embodiment of this application, unless otherwise stated, "multiple" means two or more than two.

Embodiments of this application provide a method for estimating an object parameter and an electronic device. When an image collected by a camera of the electronic device includes a to-be-measured object, after a user's operation used to indicate the electronic device to perform measurement is detected, the electronic device may identify parameters such as mass, calories, or nutrient elements of the to-be-measured object, and display these parameters to the user by using a touchscreen, so that the user determines the parameters of the current to-be-measured object, thereby providing a reliable reference for a healthy diet of the user.

There are a plurality of categories of to-be-measured objects, for example, fruits, vegetables, meat, milk, steamed bread, porridge, steamed stuffed buns, and noodles. A to-be-measured object may be one object in a category. For example, the to-be-measured object may be one apple, one banana, or one orange. The to-be-measured object may be objects in a plurality of categories, for example, the to-be-measured object is a steamed stuffed bun and millet porridge.

It should be understood that when there are a plurality of to-be-measured objects, the electronic device may identify categories and determine parameters, and display, to the user by using the touchscreen, total parameters of the plurality of objects in the current image. In an unclaimed embodiment, the image includes one apple and one banana, and the electronic device may display total mass and total calories of the apple and the banana to the user by using the touchscreen. Parameters of each object in the plurality of objects are displayed by using the touchscreen. For example, the image includes one apple and one banana, and the electronic device may display mass and calories of the apple and mass and calories of the banana to the user by using the touchscreen.

In the embodiments of this application, an image segmentation method may be used to determine a region in which a to-be-measured object is located in an image. Image segmentation may be also referred to as semantic segmentation, and is a technology and a process of segmenting an image into several particular regions having special properties, and specifying a target of interest. There may be a plurality of image segmentation methods, for example, a deep learning-based segmentation method, a convolutional neural network (CNN)-based segmentation method, a threshold-based segmentation method, a region-based segmentation method, an edge-based segmentation method, and a specific theory-based segmentation method.

The method for estimating an object parameter in the embodiments of this application is applied to a a mobile phone, a tablet computer, a wearable device, an in-vehicle device, an augmented reality (AR) device/a virtual reality (VR) device, a notebook computer, an ultra-mobile personal computer (UMPC), a netbook, or a personal digital assistant (PDA). A specific type of the electronic device is not limited in the embodiments of this application.

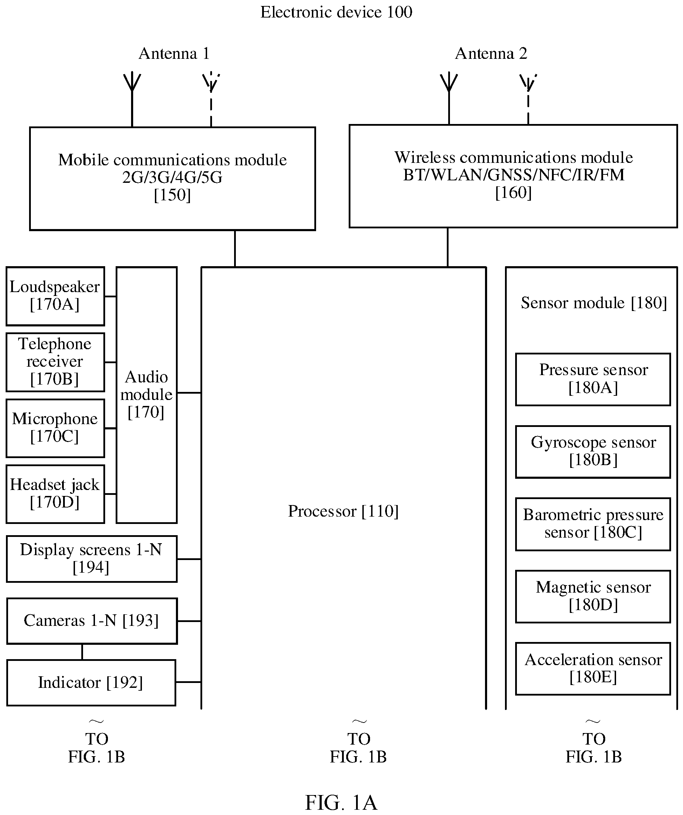

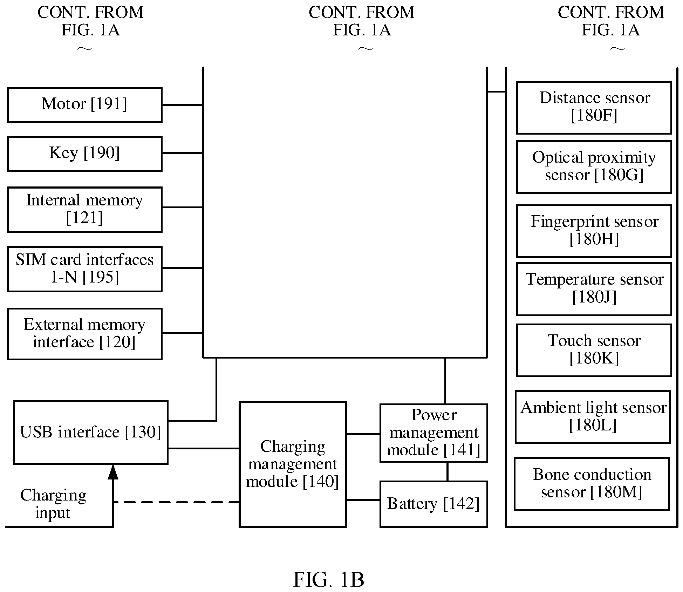

For example, FIG. 1A and FIG. 1B are a schematic structural diagram of an electronic device 100. The electronic device 100 may include a processor 110, an external memory interface 120, an internal memory 121, a universal serial bus (USB) interface 130, a charging management module 140, a power management module 141, a battery 142, an antenna 1, an antenna 2, a mobile communications module 150, a wireless communications module 160, an audio module 170, a loudspeaker 170A, a telephone receiver 170B, a microphone 170C, a headset jack 170D, a sensor module 180, a key 190, a motor 191, an indicator 192, a camera 193, a touchscreen 194, a subscriber identity module (SIM) card interface 195, and the like. The sensor module 180 may include any one or more of a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the schematic structure in this embodiment of this application constitutes no specific limitation on the electronic device 100. In some other embodiments of this application, the electronic device 100 may include more or fewer components than those shown in the figure, or some components may be combined, or some components may be split, or components are arranged in different manners. The components shown in the figure may be implemented by using hardware, software, or a combination of software and hardware.

The processor 110 may include one or more processing units. For example, the processor 110 may include an application processor (AP), a modem processor, a graphics processing unit (GPU), an image signal processor (ISP), a controller, a memory, a video codec, a digital signal processor (DSP), a baseband processor, and/or a neural-network processing unit (NPU). Different processing units may be separate components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, to store an instruction and data. In some embodiments, the memory in the processor 110 is a cache. The memory may store an instruction or data that is just used or circularly used by the processor 110. If the processor 110 needs to use the instruction or the data again, the processor 110 may directly invoke the instruction or the data from the memory, so as to avoid repeated access, and reduce a waiting time of the processor 110, thereby improving system efficiency.

In some embodiments, the processor 110 may include one or more interfaces. The interface may include an integrated circuit (I2C) interface, an integrated circuit sound (I2S) interface, a pulse code modulation (PCM) interface, a universal asynchronous receiver/transmitter (UART) interface, a mobile industry processor interface (MIPI), a general-purpose input/output (GPIO) interface, a subscriber identity module (SIM) interface, a universal serial bus (USB) interface, and/or the like.

It may be understood that a schematic interface connection relationship between the modules in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or may be a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device through the power management module 141.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the touchscreen 194, the camera 193, the wireless communications module 160, and the like. The power management module 141 may be further configured to monitor parameters such as a battery capacity, a battery cycle count, and a battery state of health (electric leakage and impedance). In some other embodiments, the power management module 141 may be alternatively disposed in the processor 110. In some other embodiments, the power management module 141 and the charging management module 140 may be alternatively disposed in a same component.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may be multiplexed to improve utilization of the antennas. For example, the antenna 1 may be multiplexed as a diversity antenna of a wireless local area network. In some other embodiments, the antenna may be used in combination with a tuning switch.

The mobile communications module 150 may provide a solution to wireless communication such as 2G/3G/4G/5G applied to the electronic device 100. The mobile communications module 150 may include at least one filter, a switch, a power amplifier, a low noise amplifier (LNA), and the like. The mobile communications module 150 may receive an electromagnetic wave through the antenna 1, perform processing such as filtering and amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same component.

The modem processor may include a modulator and a demodulator. The modulator is configured to modulate a to-be-sent low-frequency baseband signal into an intermediate-and-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal through an audio device (which is not limited to the loudspeaker 170A, the telephone receiver 170B, and the like), or displays an image or a video through the touchscreen 194. In some embodiments, the modem processor may be an independent component. In some other embodiments, the modem processor may be independent of the processor 110, and the modem processor and the mobile communications module 150 or another function module may be disposed in a same component.

The wireless communications module 160 may provide a solution to wireless communication applied to the electronic device 100, for example, a wireless local area network (WLAN) (for example, a wireless fidelity (Wi-Fi) network), Bluetooth (BT), a global navigation satellite system (GNSS), frequency modulation (FM), near field communication (NFC), and an infrared (IR) technology. The wireless communications module 160 may be one or more components into which at least one communication processing module is integrated. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communications module 150 of the electronic device 100 are coupled, and the antenna 2 and the wireless communications module 160 of the electronic device 100 are coupled, so that the electronic device 100 can communicate with a network and another device by using a wireless communications technology. The wireless communications technology may include a global system for mobile communications (GSM), a general packet radio service ( GPRS), code division multiple access (CDMA), wideband code division multiple access ( WCDMA), time-division code division multiple access (TD-SCDMA), long term evolution ( LTE), BT, a GNSS, a WLAN, NFC, FM, an IR technology, and/or the like. The GNSS may include a global positioning system (GPS), a global navigation satellite system (GLONASS), a beidou navigation satellite system (BDS), a quasi-zenith satellite system (QZSS), and/or a satellite based augmentation system (SBAS).

The electronic device 100 implements a display function by using the GPU, the touchscreen 194, the application processor, and the like. The GPU is a microprocessor for image processing, and connects to the touchscreen 194 and the application processor. The GPU is configured to perform mathematical and geometrical calculation, and is configured to perform graphics rendering. The processor 110 may include one or more GPUs, and execute a program instruction to generate or change display information.

The touchscreen 194 is configured to display an image, a video, and the like. The touchscreen 194 includes a display panel. The display panel may use a liquid crystal touchscreen (LCD), an organic light-emitting diode (OLED), an active-matrix organic light-emitting diode (AMOLED), a flexible light-emitting diode (FLED), a Miniled, a MicroLed, a Micro-oLed, a quantum dot light-emitting diode (QLED), and the like. In some embodiments, the electronic device 100 may include one or N touchscreens 194, and N is a positive integer greater than 1.

In this embodiment of this application, the electronic device 100 may display a detected parameter of a to-be-measured object to a user by using the touchscreen 194, so that the user adjusts a diet of the user in a timely manner. In some possible implementations, the electronic device 100 may alternatively remind, by using the touchscreen 194, the user in a text manner to determine whether a category of a to-be-measured object determined by the electronic device 100 is accurate, and when there are a plurality of to-be-measured objects, the electronic device 100 reminds the user in a text manner whether to separately perform measurement.

The electronic device 100 may implement a photographing function by using the ISP, the camera 193, the video codec, the GPU, the touchscreen 194, the application processor, and the like.

The ISP is configured to process data fed back by the camera 193. For example, during photo taking, a shutter is opened, a ray of light is transmitted to a light-sensitive element of the camera through a lens, an optical signal is converted into an electrical signal, and the light-sensitive element of the camera transmits the electrical signal to the ISP for processing, and the ISP converts the electrical signal into an image that can be seen. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and the image is projected to the light-sensitive element. The light-sensitive element may be a charge coupled device (CCD) or a complementary metal-oxide-semiconductor (CMOS) phototransistor. The light-sensitive element converts an optical signal into an electrical signal, and then transmits the electrical signal to the ISP, so that the ISP converts the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, and N is a positive integer greater than 1.

In this embodiment of this application, the electronic device 100 may have a binocular camera, and the electronic device 100 may determine depths of the electronic device and the to-be-measured object by using a parallax of the dual cameras. The parallax of the dual cameras refers to a parallax of two images generated when the two different cameras of the device photograph a same scenario. In addition, the electronic device may determine, by using an image collected by the camera 193, a heat map corresponding to the image.

The digital signal processor is configured to process a digital signal, and in addition to a digital image signal, may further process another digital signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (MPEG) 1, MPEG 2, MPEG 3, and MPEG 4.

The NPU is a neural-network (NN) computing processor, and quickly processes input information by using a biological neural network structure such as a mode of transmission between human-brain nerve cells, and may further constantly perform self-learning. The NPU may be used to implement an application such as intelligent cognition of the electronic device 100, for example, image recognition, facial recognition, voice recognition, and text understanding.

In this embodiment of this application, the NPU may convert a collected three-dimensional image into a two-dimensional image, and determine, by using a specific algorithm, an area of a region in which the to-be-measured object is located in the two-dimensional image. The NPU may further collect a parallax of a left image and a right image by using the dual cameras. The left image and the right image are images generated when the different cameras of the device photograph a same scenario. The same scenario includes the to-be-measured object, and then depth of the to-be-measured object in the image is determined based on the parallax of the first image and the second image.

The NPU may further finally determine a parameter of the to-be-measured object based on the determined area of the region in which the to-be-measured object is located and the depth of the to-be-measured object. For example, when the to-be-measured object is food, mass, a volume, carbohydrate content, or nutrient element content of the to-be-measured object may be determined.

The external memory interface 120 may be configured to connect to an external storage card such as a micro SD card, to expand a storage capability of the electronic device 100. The external storage card communicates with the processor 110 by using the external memory interface 120, so as to implement a data storage function, such as storing a file such as music or a video in the external storage card.

The internal memory 121 may be configured to store computer executable program code, and the executable program code includes an instruction. The processor 110 runs the instruction stored in the internal memory 121, to perform various function applications and data processing of the electronic device 100. The internal memory 121 may include a program storage region and a data storage region. The program storage region may store an operating system, an application required by at least one function (for example, a voice playing function or an image playing function), and the like. The data storage region may store data (for example, audio data and an address book) and the like created when the electronic device 100 is used. In addition, the internal memory 121 may include a highspeed random access memory, or may include a non-volatile memory such as at least one magnetic disk memory, a flash memory, or a universal flash storage (UFS).

The electronic device 100 may implement an audio function such as music playing or recording by using the audio module 170, the loudspeaker 170A, the telephone receiver 170B, the microphone 170C, the headset jack 170D, the application processor, and the like.

The audio module 170 is configured to convert digital audio information into an analog audio signal output, and is further configured to convert an analog audio input into a digital audio signal. The audio module 170 may be further configured to encode and decode an audio signal. In some embodiments, the audio module 170 may be disposed in the processor 110, or some function modules of the audio module 170 are disposed in the processor 110.

The loudspeaker 170A, also referred to as a "speaker", is configured to convert an audio electrical signal into a sound signal. The electronic device 100 may be used to listen to music or answer a call in a hands-free mode by using the loudspeaker 170A.

The telephone receiver 170B, also referred to as a "receiver", is configured to convert an audio electrical signal into a sound signal. When the electronic device 100 is used to answer a call or receive voice information, the telephone receiver 170B may be put close to a human ear, to receive the voice information.

The microphone 170C is configured to convert a sound signal into an electrical signal. When making a call or sending voice information, a user may speak with the mouth approaching the microphone 170C, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may be alternatively disposed in the electronic device 100, to collect a sound signal, implement noise reduction, recognize a sound source, implement a directional recording function, and the like.

The headset jack 170D is configured to connect to a wired headset. The headset jack 170D may be a USB interface 130, or may be a 3.5 mm open mobile terminal platform (OMTP) standard interface or cellular telecommunications industry association of the USA (CTIA) standard interface.

The pressure sensor 180A is configured to sense a pressure signal, and may convert the pressure signal into an electrical signal. In some embodiments, the pressure sensor 180A may be disposed in the touchscreen 194. There are a plurality of types of pressure sensors 180A, for example, a resistive pressure sensor, an inductive pressure sensor, and a capacitive pressure sensor. The capacitive pressure sensor may include at least two parallel plates having conductive materials. When force is exerted on the pressure sensor 180A, capacitance between electrodes changes. The electronic device 100 determines strength of pressure based on a change of the capacitance. When a touch operation is performed on the touchscreen 194, the electronic device 100 detects strength of the touch operation by using the pressure sensor 180A. The electronic device 100 may further calculate a position of the touch based on a detection signal of the pressure sensor 180A. In some embodiments, touch operations that are performed on a same touch position but have different touch operation strength may correspond to different operation instructions. For example, when a touch operation whose touch operation strength is less than a first pressure threshold is performed on an SMS message application icon, an instruction of checking an SMS message is executed. When a touch operation whose touch operation strength is greater than or equal to the first pressure threshold is performed on the SMS message application icon, an instruction of creating a new SMS message is executed.

The distance sensor 180F is configured to measure a distance. The electronic device 100 may measure a distance through infrared or laser. In some embodiments, in a photographing scenario, the electronic device 100 may measure a distance by using the distance sensor 180F, to implement quick focusing.

In this embodiment of this application, the electronic device 100 may further measure a depth from the electronic device 100 to the to-be-measured object by using the distance sensor.

The optical proximity sensor 180G may include, for example, a light-emitting diode (LED) and an optical detector such as a photodiode. The light-emitting diode may be an infrared light-emitting diode. The electronic device 100 may emit infrared light by using the light-emitting diode. The electronic device 100 detects infrared reflected light from a nearby object by using the photodiode. When detecting sufficient reflected light, the electronic device 100 may determine that there is an object near the electronic device 100. When detecting insufficient reflected light, the electronic device 100 may determine that there is no object near the electronic device 100. The electronic device 100 may detect, by using the optical proximity sensor 180G, that a user holds the electronic device 100 close to an ear for a call, so that automatic screen-off is implemented to achieve power saving. The optical proximity sensor 180G may be further configured to automatically unlock and lock the screen in a leather cover mode and a pocket mode.

The ambient light sensor 180L is configured to sense luminance of ambient light. The electronic device 100 may adaptively adjust luminance of the touchscreen 194 based on the sensed luminance of the ambient light. The ambient light sensor 180L may be further configured to automatically adjust white balance during photo taking. The ambient light sensor 180L may further cooperate with the optical proximity sensor 180G to detect whether the electronic device 100 is in a pocket, so as to prevent an accidental touch.

The fingerprint sensor 180H is configured to collect a fingerprint. The electronic device 100 may implement fingerprint unlock, application lock accessing, fingerprint photographing, fingerprint-based call answering, and the like by using a feature of the collected fingerprint.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 reduces performance of a processor near the temperature sensor 180J, to reduce power consumption and implement heat protection. In some other embodiments, when the temperature is lower than another threshold, the electronic device 100 heats the battery 142, to avoid an abnormal shutdown of the electronic device 100 caused by a low temperature. In some other embodiments, when the temperature is lower than still another threshold, the electronic device 100 boosts an output voltage of the battery 142, to avoid an abnormal shutdown caused by a low temperature.

The touch sensor 180K is also referred to as a "touch panel". The touch sensor 180K may be disposed on the touchscreen 194. The touch sensor 180K and the touchscreen 194 form a touchscreen, which is also referred to as a "touchscreen". The touch sensor 180K is configured to detect a touch operation performed on or near the touch sensor 180K. The touch sensor may transmit the detected touch operation to the application processor, to determine a touch event type. The application processor may provide a visual output related to the touch operation by using the touchscreen 194. In some other embodiments, the touch sensor 180K may be alternatively disposed on a surface of the electronic device 100, and is located on a position different from that of the touchscreen 194.

The bone conduction sensor 180M may obtain a vibration signal. In some embodiments, the bone conduction sensor 180M may obtain a vibration signal of a vibration bone of a human vocal-cord part. The bone conduction sensor 180M may alternatively contact a human pulse, and receive a blood pressure beating signal. In some embodiments, the bone conduction sensor 180M may be alternatively disposed in a headset, to form a bone conduction headset. The audio module 170 may obtain a voice signal through parsing based on the vibration signal, of the vibration bone of the vocal-cord part, that is obtained by the bone conduction sensor 180M, to implement a voice function. The application processor may parse heart rate information based on the blood pressure beating signal obtained by the bone conduction sensor 180M, to implement a heart rate detection function.

The key 190 includes a power key, a volume key, and the like. The key 190 may be a mechanical key, or may be a touch key. The electronic device 100 may receive a key input, and generate a key signal input related to user setting and function control of the electronic device 100.

The motor 191 may generate a vibration prompt. The motor 191 may be configured to provide a vibration prompt for an incoming call, and may be further configured to provide a touch vibration feedback. For example, touch operations performed on different applications (for example, photo taking and audio playing) may correspond to different vibration feedback effects. For touch operations performed on different regions of the touchscreen 194, the motor 191 may also correspond to different vibration feedback effects. Different application scenarios (for example, a time prompt, information receiving, an alarm clock, and a game) may also correspond to different vibration feedback effects. A touch vibration feedback effect may be further customized.

The indicator 192 may be an indicator light, may be configured to indicate a charging state and a battery change, and may be further configured to indicate a message, a missed call, a notification, and the like.

A software system of the electronic device 100 may use a layered architecture, an event-driven architecture, a microkernel architecture, a micro service architecture, or a cloud architecture. In this embodiment of this application, the software structure of the electronic device 100 is illustrated by using an Android system with a layered architecture as an example.

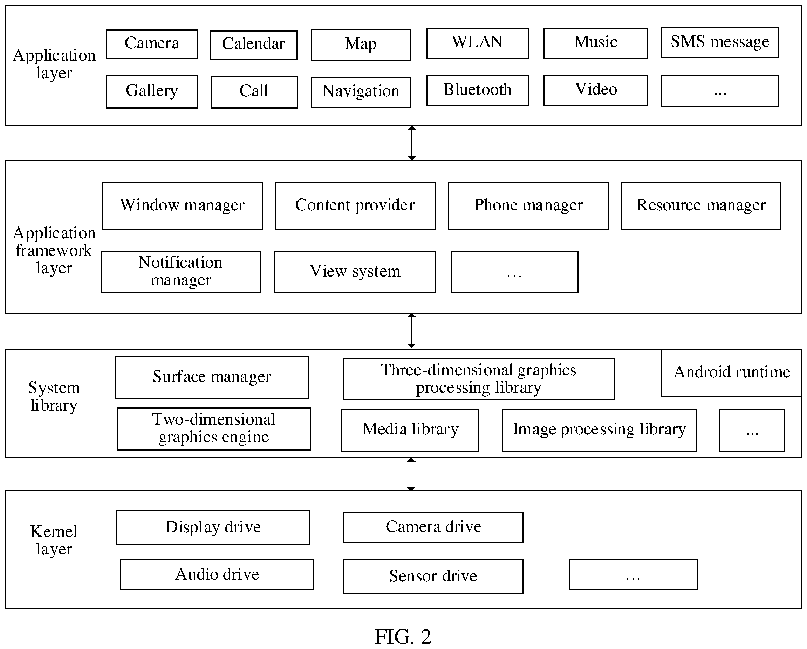

FIG. 2 is a block diagram of the software structure of the electronic device 100 in this embodiment of this application. In the layered architecture, software is divided into several layers, and each layer has a clear role and task. Layers communicate with each other through a software interface. In some embodiments, the Android system is divided into four layers that are respectively an application layer, an application framework layer, an Android runtime (Android runtime) and system library, and a kernel layer from top to bottom. The application layer may include a series of application packages.

As shown in FIG. 2, the application packages may include applications such as camera, photos, calendar, phone, maps, navigation, WLAN, Bluetooth, music, videos, and SMS messages.

The application framework layer provides an application programming interface (API) and a programming framework for the applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window application. The window manager may obtain a size of a touchscreen, determine whether there is a status bar, lock the screen, capture the screen, and the like.

The content provider is configured to store and obtain data, so that the data can be accessed by an application. The data may include a video, an image, an audio, calls made and answered, a browsing history and bookmarks, an address book, and the like.

The view system includes a visual control such as a control for text display or a control for picture display. The view system may be configured to construct an application. A display interface may be formed by one or more views. For example, a display interface including an SMS notification icon may include a view for displaying text and a view for displaying a picture.

The phone manager is configured to provide a communication function of the electronic device 100, for example, call state management (including getting through, hang-up, and the like).

The resource manager provides various resources for an application, for example, a localized character string, an icon, a picture, a layout file, and a video file.

The notification manager enables an application to display notification information on a status bar. The notification information may be a message used to indicate a notification type, and may automatically disappear after a short stay without interacting with a user. For example, the notification manager is configured to notify download completion, a message prompt, and the like. The notification manager may alternatively be a notification that appears on a top status bar of the system in a form of a graph or a scroll bar text, for example, a notification of an application running on the background, or may be a notification that appears on the screen in a form of a dialog window. For example, text information is prompted on a status bar, a prompt tone is made, the electronic device vibrates, or an indicator light flashes.

The Android Runtime includes a kernel library and a virtual machine. The Android runtime is responsible for scheduling and managing the Android system.

The kernel library includes two parts: One part is a performance function that the Java language needs to invoke, and the other part is a kernel library of Android.

The application layer and the application framework layer run on the virtual machine. The virtual machine executes Java files of the application layer and the application framework layer as binary files. The virtual machine is used to execute functions such as object lifecycle management, stack management, thread management, security and exception management, and garbage collection.

The system library may include a plurality of function modules, such as a surface manager (surface manager), a media library (media libraries), a three-dimensional graphics processing library (for example, OpenGL ES), and a 2D graphics engine (for example, SGL).

The surface manager is configured to manage a display subsystem, and converge 2D and 3D layers of a plurality of applications.

The media library supports playback and recording of a plurality of common audio and video formats, a static image file, and the like. The media library may support a plurality of audio and video encoding formats, for example, MPEG 4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display drive, a camera drive, an audio drive, and a sensor drive.

In this embodiment of this application, referring to FIG. 2, the system library may further include an image processing library. After a camera application is started, the camera application may obtain an image collected by the electronic device. Based on a specific algorithm, the image processing library may identify a region in which a to-be-measured object is located in the image, and perform secondary segmentation on the region in which the to-be-measured object is located, to obtain an accurate region of the to-be-measured object.

For ease of understanding, in the following embodiments of this application, the method for estimating an object parameter in the embodiments of this application is specifically described with reference to the accompanying drawings by using a mobile phone with the structures shown in FIG. 1A, FIG. 1B, and FIG. 2 as an example.

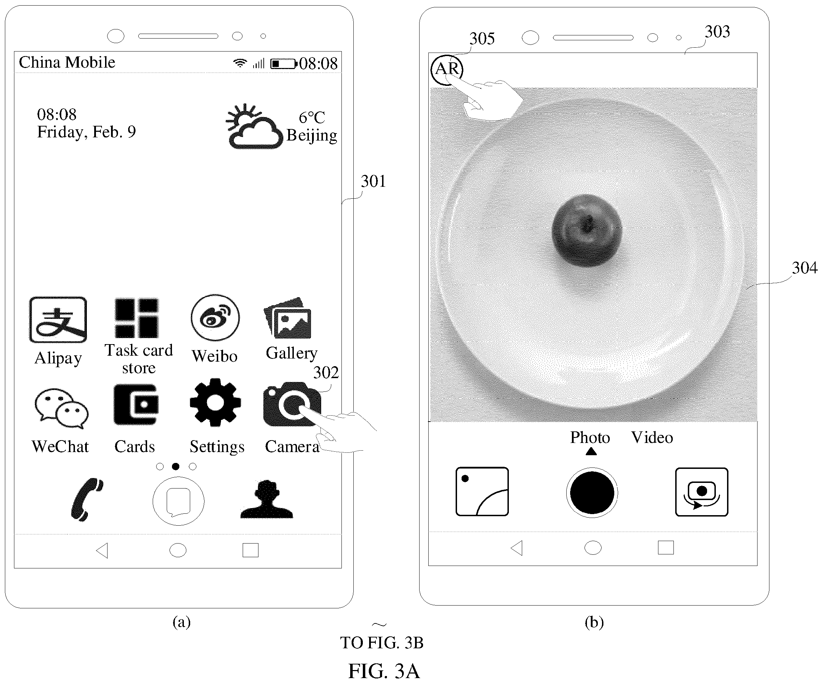

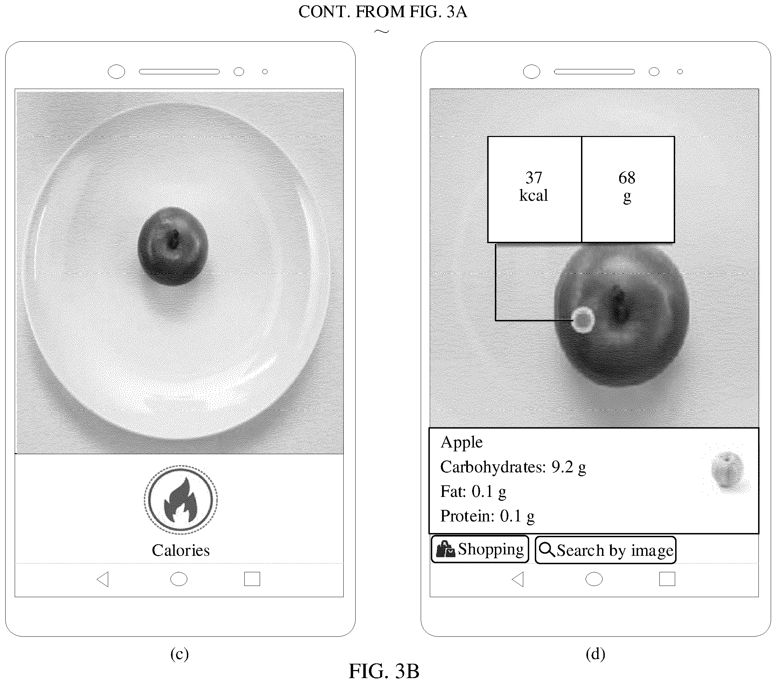

(a) in FIG. 3A and FIG. 3B shows a graphical user interface (graphical user interface, GUI) of the mobile phone, and the GUI is a desktop 301 of the mobile phone. When detecting an operation that a user taps an icon 302 of a camera application (application, APP) on the desktop 301, the mobile phone may start the camera application, and display another GUI shown in (b) in FIG. 3A and FIG. 3B. The GUI may be referred to as a photographing interface 303. The photographing interface 303 may include a viewfinder frame 304. In a preview state, the viewfinder frame 304 may display a preview image in real time. The GUI shown in (b) in FIG. 3 A and FIG. 3B further includes an AR measurement mode icon 305. After detecting an operation that the user taps the icon 305, the mobile phone may enter an AR measurement mode, as shown in (c) in FIG. 3A and FIG. 3B. In the AR measurement mode, the mobile phone may measure a to-be-measured object in an image displayed in the viewfinder frame. For example, a current image includes one plate, and one apple is placed on the plate. The mobile phone may first identify a to-be-measured object in the image as an apple, and then measure a parameter of the apple. As shown in (d) in FIG. 3A and FIG. 3B, the mobile phone may display a measured parameter to the user by using a touchscreen, for example, the mobile phone may display mass, calories, carbohydrates, fat, and protein content of the apple by using the touchscreen.

In this embodiment of this application, AR measurement may be used to measure information about a depth from the mobile phone to an object, further convert a three-dimensional image into a two-dimensional image, and determine area information of a region in which the object is located in the two-dimensional image. Further, AR measurement may be used to further determine a volume, mass, another object parameter, and the like of the object based on the depth information and the area information.

According to the method for estimating an object parameter provided in this embodiment of this application, a parameter of a to-be-measured object is displayed to a user by using a touchscreen, which may provide a reliable reference for a healthy diet of the user.

Optionally, in this embodiment of this application, an entry for entering the AR measurement mode by the mobile phone is not limited to the camera in (b) in FIG. 3A and FIG. 3B, and may be another entry.

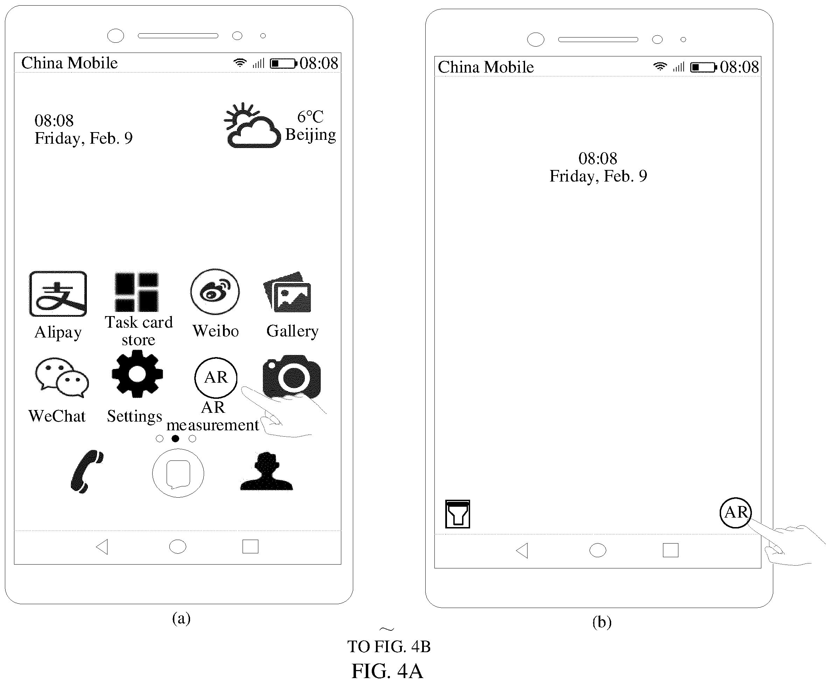

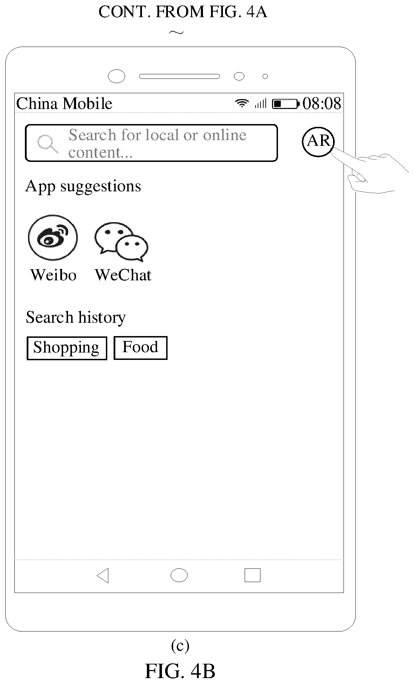

For example, as shown in (a) in FIG. 4A and FIG. 4B, the desktop of the mobile phone may include an icon of the AR measurement mode. When the mobile phone detects an operation that the user taps the icon, the mobile phone enters the AR measurement mode.

For another example, as shown in (b) in FIG. 4A and FIG. 4B, when the mobile phone is on a lock screen, the lock screen includes the icon of the AR measurement mode. In this case, the user may directly tap the icon on the lock screen without unlocking the screen. When the mobile phone detects an operation that the user taps the icon, the mobile phone enters the AR measurement mode.

In this embodiment of this application, when the icon of the AR measurement mode is placed on the lock screen, the user can quickly enter the AR measurement mode to perform measurement without unlocking the mobile phone.

For another example, as shown in (c) in FIG. 4A and FIG. 4B, a local search interface of the mobile phone may include the icon of the AR measurement mode. When the mobile phone detects an operation that the user taps the icon, the mobile phone enters the AR measurement mode.

It should be understood that the mobile phone may enter the local search interface after detecting, on the mobile phone desktop shown in (a) in FIG. 4A and FIG. 4B, a gesture that the user slides up or down.

It should be further understood that the entry for entering the AR measurement mode by the mobile phone is not limited to the foregoing several manners, and another entry may be included, for example, may be a soft key entry on an interface (for example, a floating ball on the mobile phone desktop), or may be a hard key entry. This is not limited in this embodiment of this application.

It should be further understood that in this embodiment of this application, there may be a plurality of entries for the AR measurement mode in the mobile phone, so that the user conveniently and quickly enters the AR measurement mode.

The following describes several other manners of entering the AR measurement mode in this embodiment of this application by using an example in which (b) in FIG. 3 A and FIG. 3B is on a camera interface and the mobile phone detects that the user taps a control of the AR measurement mode.

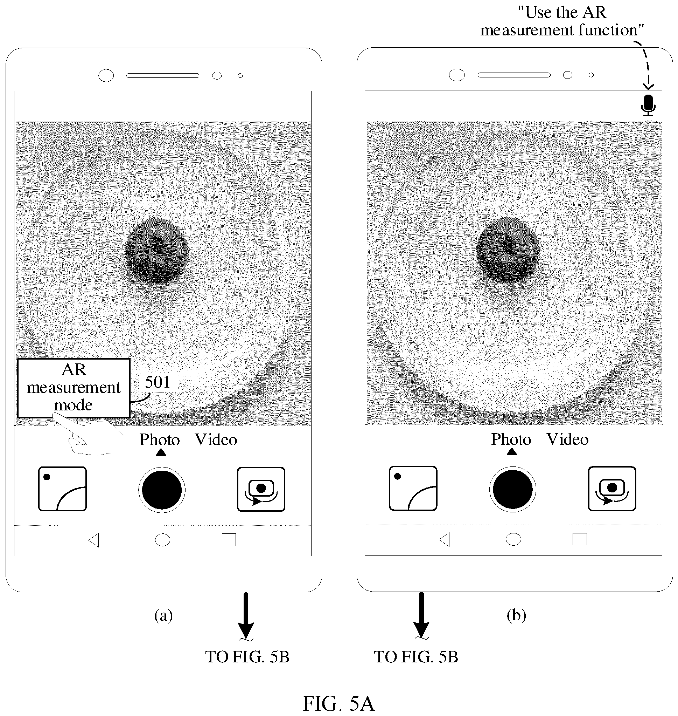

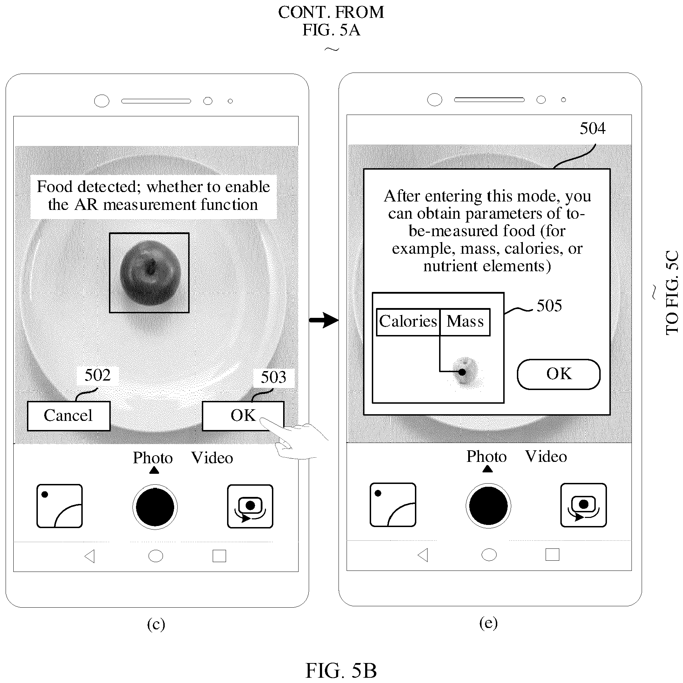

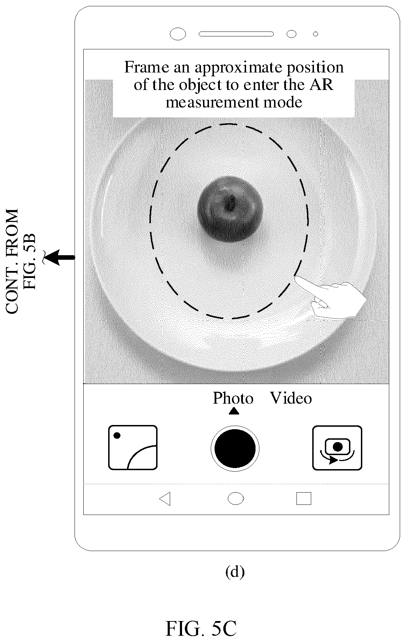

In an embodiment, the photographing interface includes a first control used to indicate the AR measurement mode. When the mobile phone detects an operation that the user taps the first control, the mobile phone enters the AR measurement mode. For example, the first control may be a control 501 shown in (a) in FIG. 5A, FIG. 5B and FIG. 5C.

In another embodiment, after the mobile phone displays the photographing interface, referring to (b) in FIG. 5A, FIG. 5B and FIG. 5C, if the mobile phone detects an operation that the user instructs, in a voice manner, to enter the AR measurement mode or to use an AR measurement function, the mobile phone enters the AR measurement mode.

In another embodiment, after the photographing interface is displayed on the mobile phone, it may be recognized that food is included in a current viewfinder frame. The mobile phone may remind, in a text (or voice) reminder manner, the user whether to enable the AR measurement function. For example, as shown in (c) in FIG. 5A, FIG. 5B and FIG. 5C, the mobile phone may display, on the touchscreen, "Food detected; whether to enable the AR measurement function". After the mobile phone detects an operation that the user taps a control 503, the mobile phone enters the AR measurement mode.

It should be understood that when the user is merely intended to take a photo of delicious food, the user may tap a control 502. After detecting an operation that the user taps the control 502, the mobile phone may enter a normal photographing mode.

In another embodiment, after detecting a preset gesture of the user on the photographing interface, the mobile phone enters the AR measurement mode. For example, referring to (d) in FIG. 5A, FIG. 5B and FIG. 5C, the mobile phone may remind the user on the touchscreen in a text reminder manner of "Frame an approximate position of the object to enter the AR measurement mode". The mobile phone enters the AR measurement mode after detecting a gesture operation that the user draws a circular track on the photographing interface.

For another example, after detecting a touching and holding operation of the user in the viewfinder frame on the photographing interface, the mobile phone enters the AR measurement mode.

For another example, after detecting a pressing operation in the viewfinder frame on the photographing interface (strength of the pressing is greater than or equal to a preset value), the mobile phone enters the AR measurement mode.

After the mobile phone enters the AR measurement mode for the first time, or each time the mobile phone enters the AR measurement mode, the mobile phone may provide a reminder description for the user by displaying the reminder description on the touchscreen or providing the reminder description in a voice manner, to notify the user of a function and a role of the AR measurement mode. For example, the mobile phone may remind the user by displaying text information of "After entering this mode, you can obtain parameters of to-be-measured food (for example, mass, calories, or nutrient elements)". For another example, referring to (e) in FIG. 5A, FIG. 5B and FIG. 5C, the mobile phone may remind the user by using a window 504. In the AR measurement mode, the user may obtain parameter information of a to-be-measured object, and the user may be provided with a schematic diagram 505 of an AR measurement effect, so that the user can understand the function of the AR measurement mode.

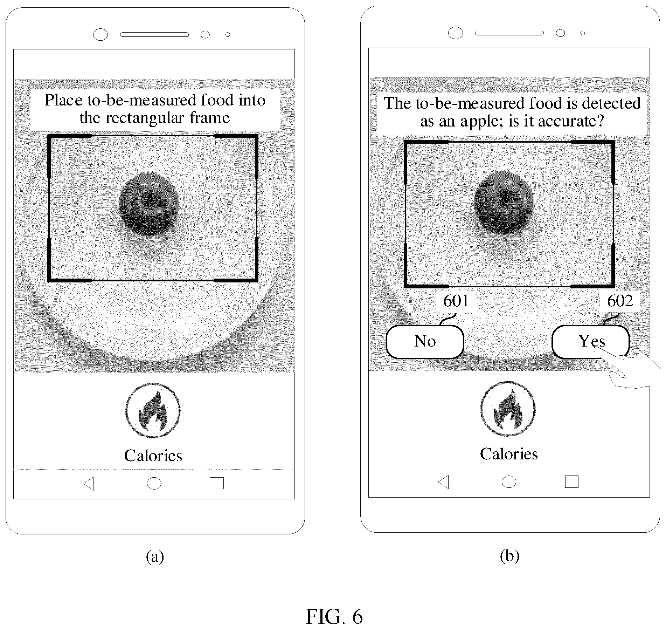

(a) in FIG. 6 shows a GUI in which the mobile phone enters the AR measurement mode. In this case, a rectangular frame may pop up in the viewfinder frame of the mobile phone. The mobile phone may remind the user to place to-be-measured food in the rectangular frame in a text (or voice) reminder manner. The mobile phone may determine a category of the to-be-measured food in the rectangular frame by using a preset algorithm, and remind, in the text (or voice) reminder manner, the user of the determined category of the to-be-measured object.

For example, as shown in (b) in FIG. 6, the mobile phone determines that the category of the to-be-measured object is apple. The mobile phone may remind the user to confirm the category by using text (or voice). The mobile phone may remind the user by using the touchscreen of "the to-be-measured object is detected as an apple". After detecting an operation that the user taps a control 602, the mobile phone may detect a parameter of the to-be-measured object in a next step.

It should be understood that, in this embodiment of this application, the mobile phone may display the rectangular frame and the text on the touchscreen at the same time, or may first display the rectangular frame and then display the text, or may first display the text and then display the rectangular frame, which is not limited in this embodiment of this application.

In this embodiment of this application, when detecting the category of the to-be-measured object, the mobile phone may remind the user of the detected category of the to-be-measured object, which helps the user determine whether the category detected by the mobile phone is accurate. When the detection is inaccurate, the mobile phone may continue to perform detection or an accurate category is manually input, which helps avoid inaccurate subsequent parameter measurement due to a category detection error.

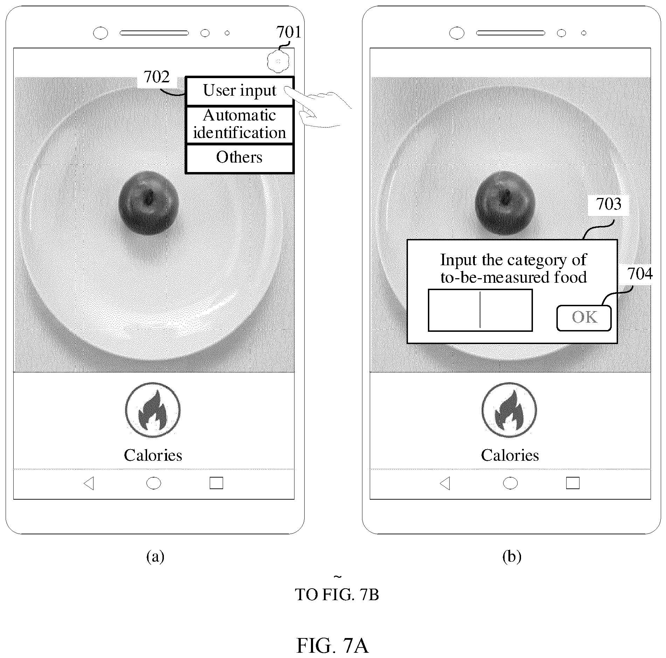

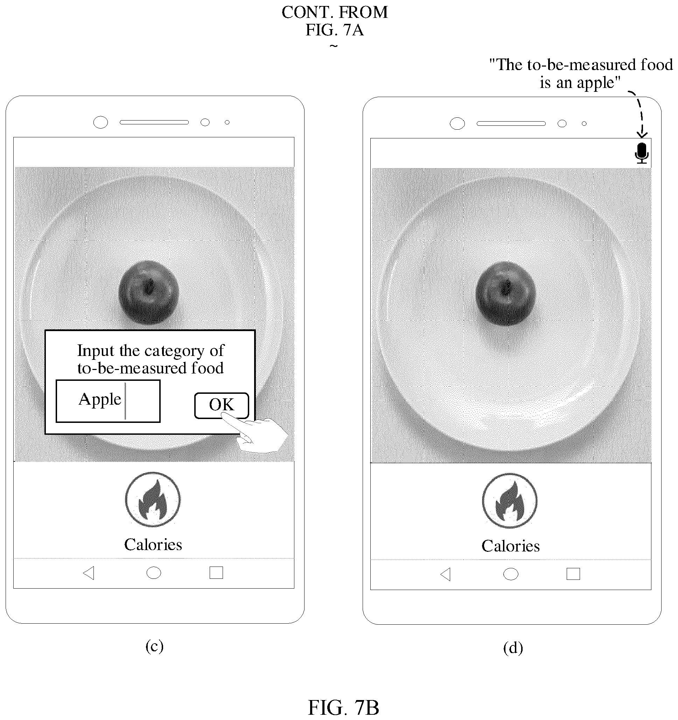

In another embodiment, the mobile phone may determine the category of the object by using information about the to-be-measured object in a current image, and remind the user, in a text reminder (or a voice reminder) manner, that the object detected by the user is a grapefruit (but an actual category of the to-be-measured object is an orange). The user may determine that the to-be-measured object is not a grapefruit. In this case, after detecting an operation that the user taps the control 601, the mobile phone may remind the user to input the actual category of the to-be-measured object. For example, as shown in (b) in FIG. 7A and FIG. 7B, the user may input the category of the object as an orange. When the mobile phone detects that the user inputs the category of the object as an orange and that the user taps a control 704, the mobile phone may determine that the category of the to-be-measured object is orange.

Optionally, in this embodiment of this application, the mobile phone may determine the category of the to-be-measured object based on a preset algorithm, or may determine the category of the to-be-measured object by using information input by the user.

For example, as shown in (a) in FIG. 7A and FIG. 7B, the interface for entering the AR measurement mode includes a setting option 701. After the mobile phone detects that the user taps the setting option 701, referring to (a) in FIG. 7A and FIG. 7B, the mobile phone displays a pull-down menu of the setting option, and the pull-down menu includes a user input option 702, an automatic identification option, and another option. After the mobile phone detects that the user taps the user input option 702 that is used to indicate a user input and on the pull-down menu, the mobile phone reminds the user to input a category or mass of the to-be-measured object.

As shown in (b) in FIG. 7A and FIG. 7B, the mobile phone displays a window 703 on the touchscreen to remind the user to input the category of the to-be-measured object. As shown in (c) in FIG. 7A and FIG. 7B, after the mobile phone detects that the category input by the user is "apple" in the window and detects an operation that the user taps the control 704, the mobile phone may determine that the current to-be-measured object is an apple.

In an embodiment, as shown in (d) in FIG. 7A and FIG. 7B, the user may alternatively input the category of the to-be-measured object in a voice manner. When detecting voice information "the to-be-measured object is an apple" input by the user, the mobile phone may determine that the current to-be-measured object is an apple. Optionally, after the mobile phone detects that the user taps the user input option 702 that is used to indicate a user input and on the pull-down menu, the mobile phone reminds the user to input the mass of the to-be-measured object.

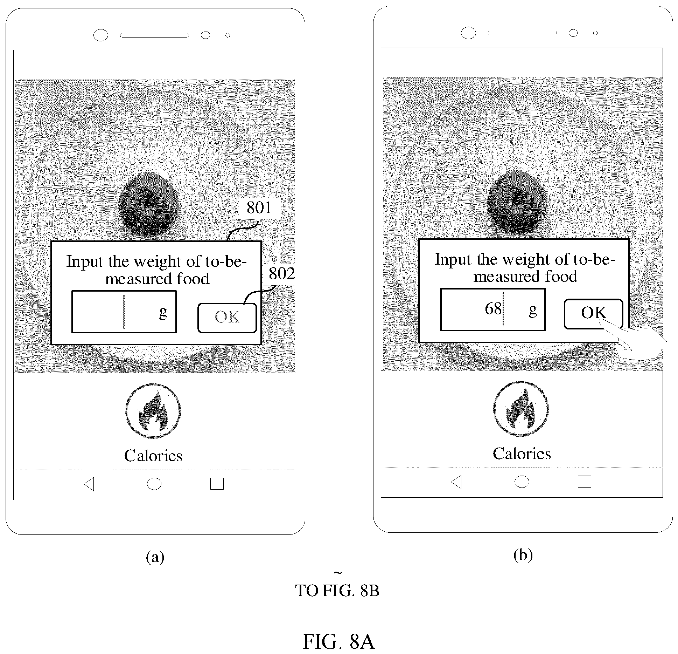

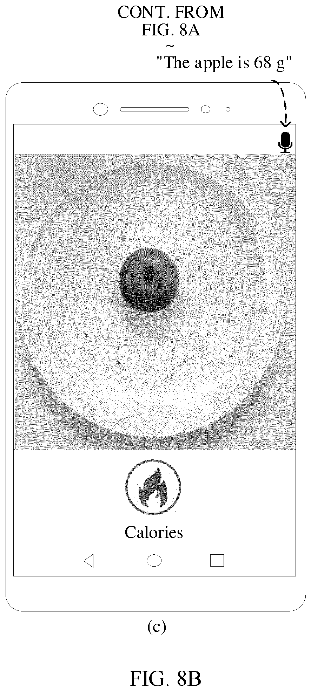

As shown in (a) in FIG. 8A and FIG. 8B, the mobile phone displays a window 801 on the touchscreen to remind the user to input the mass of the to-be-measured object. As shown in (b) in FIG. 8A and FIG. 8B, after the mobile phone detects that the mass input by the user is "68 g" in the window and detects an operation that the user taps a control 802, the mobile phone may determine that the mass of the current to-be-measured object is 68 g.

In an embodiment, as shown in (c) in FIG. 8A and FIG. 8B, the user may alternatively input the mass of the to-be-measured object in a voice manner. When detecting voice information "the apple is 68 g" input by the user, the mobile phone may determine that the current to-be-measured object is an apple, and the mass of the apple is 68 g.

It should be understood that when the mobile phone detects the voice information "the apple is 68 g" input by the user, the mobile phone may actually determine the category and the mass of the current to-be-measured object, and obtain a parameter of the current apple by using parameter information of each 100 g of apple.

In another embodiment, the user may input the mass of the to-be-measured object in a voice manner. For example, the user may output "68 g" by voice. When the mobile phone detects that the voice information input by the user is "68 g", the mobile phone may determine that the object of the category identified by the mobile phone is 68 g.

It may be understood that in this embodiment of this application, the mobile phone may remind the user on the touchscreen to input the weight of the to-be-measured object before the mobile phone determines the category of the food based on the preset algorithm, or after the mobile phone determines the category of the food based on the preset algorithm, or before the mobile phone determines the category of the to-be-measured object based on the user input, or after the mobile phone determines the category of the to-be-measured object based on the user input.

In a possible implementation, the mobile phone first determines the category of the to-be-measured object based on the preset algorithm. After detecting a manual input operation of the user, the mobile phone may remind the user on the touchscreen to input the weight of the to-be-measured object. In this way, after determining that the category detected by the mobile phone is accurate, the user inputs the weight of the object. For example, when the mobile phone determines, based on the preset algorithm, that the category of the to-be-measured object is apple, after detecting a manual input operation of the user, the mobile phone reminds the user by using a window on the touchscreen to input the mass of the apple.

In a possible implementation, after detecting a manual input operation of the user, the mobile phone may remind the user on the touch screen to input the category and the weight of the to-be-measured object. After detecting category and weight information that are input by the user in the reminder window, the mobile phone detects a parameter of the object.

Optionally, before the mobile phone detects the parameter of the to-be-measured object, the mobile phone may further remind, in a text (or voice) reminder manner, the user to select a parameter that needs to be measured.

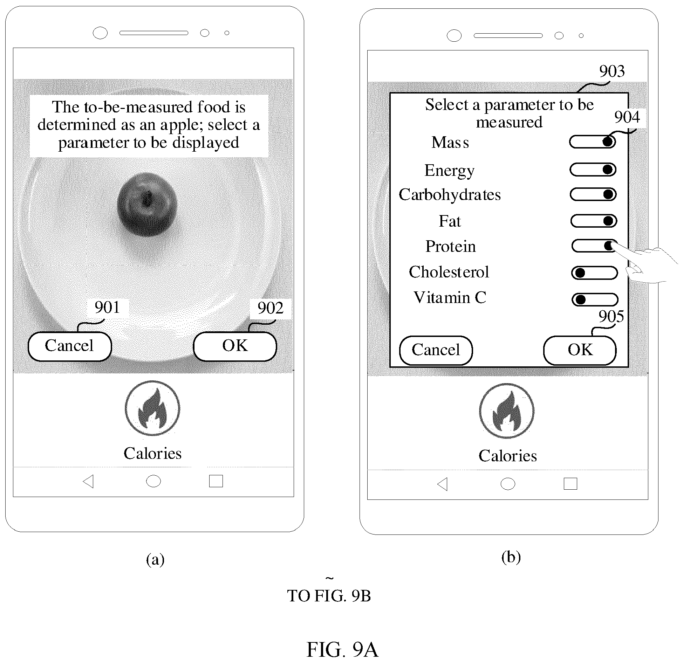

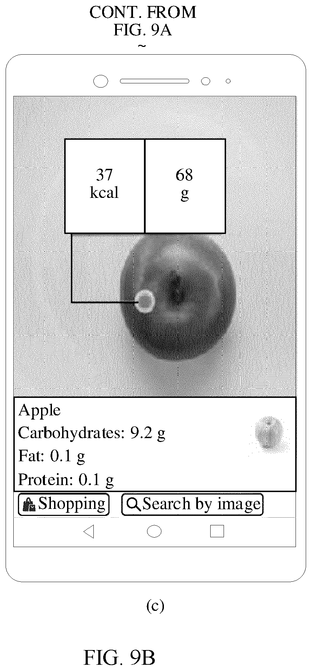

For example, as shown in (a) in FIG. 9A and FIG. 9B, after the mobile phone automatically determines the category of the object based on the preset algorithm, or determines the category of the object based on the category information input by the user, the mobile phone may remind the user in a text reminder manner of "The category of the to-be-measured food is determined; whether to perform parameter selection". After the mobile phone detects an operation that the user taps a control 902, as shown in (b) in FIG. 9A and FIG. 9B, the mobile phone may remind the user by using a window 903 on the touchscreen to select a parameter that needs to be measured. For example, as shown in (b) in FIG. 9A and FIG. 9B, when the mobile phone detects that the user slides a block 904 to the right, it indicates that a corresponding parameter needs to be detected. After the mobile phone detects that the user taps a control 905, as shown in (c) in FIG. 9A and FIG. 9B, the mobile phone determines that parameters that the user need to detect are mass, energy, carbohydrates, fat, and protein. When the mobile phone detects the foregoing parameters, the mobile phone displays the measured parameters to the user by using the touchscreen.

It may be understood that if the mobile phone previously detects the weight of the object that is input by the user, the parameter mass may not be displayed in the parameters that need to be detected in the window 903, or the parameter is displayed in the window 903, but the slider 904 corresponding to the mass cannot be slid.

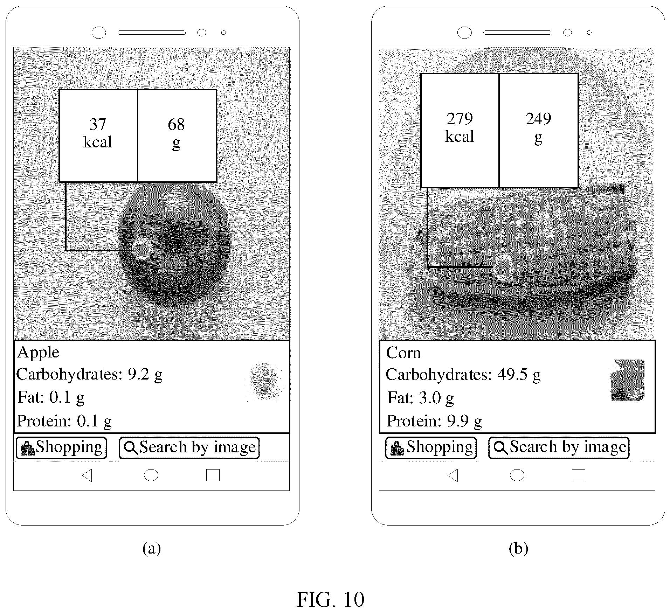

In a photographing scenario, the camera collects an image continuously and in real time. Therefore, after determining the to-be-measured object and measuring the parameter of the to-be-measured object, the mobile phone may retain measured parameter information of the to-be-measured object. When a to-be-measured image is switched from the apple shown in (a) in FIG. 10 to corn in an adjacent plate, as shown in (b) in FIG. 10, the mobile phone may display a measurement result of a parameter of the corn on the touchscreen.

It may be understood that, when measuring the parameter of the corn, the mobile phone may directly display the measurement result of the corn on the touchscreen (the measured parameter may be the same as the parameter of the previously measured apple). Alternatively, a measurement process may be the same as the previous apple measurement process. The mobile phone may remind the user of whether a detected object category is accurate, or may display the interface shown in (b) in FIG. 10 after performing measurement and detecting information such as a category or a parameter of an object that is input by the user in a window.

For different categories of objects, parameters that the user wants to obtain are different. For example, for a fruit, the user may prefer to obtain vitamins, dietary fibers, microelements, and the like contained in the fruit. However, meat has relatively low content of or no such parameters. For the meat, the user may want to obtain a parameter such as protein or fat content.

Optionally, when automatically identifying a category and a detected parameter of a to-be-measured object, the mobile phone may classify different categories of objects in advance, and detect different parameters for different categories of objects. For example, for a fruit, the mobile phone may detect one or more parameters in calories, mass, vitamins, or carbohydrates of the to-be-measured fruit. Because fat and protein content in the fruit are relatively low, the mobile phone may not detect them. For another example, for an object such as meat, milk, a steamed stuffed bun, or a pizza, the mobile phone may detect parameters such as calories, mass, protein, and fat of the object.

**For example, Table 1 shows detected parameters corresponding to objects classified by the mobile phone.**

| Level 1 category | Level 2 category | Detected parameters |
|---|---|---|
| Fruits | Apple, banana, citrus junos, orange, strawberry, kiwifruit, cherry, pitaya, grape, and the like | Energy, carbohydrates, and vitamins |
| Vegetables | Brassica chinensis L., Chinese cabbage, long bean, eggplant, and the like | Energy, carbohydrates, and dietary fibers |
| Meat | Pork, beef, mutton, chicken, and the like | Energy, carbohydrates, protein, and fat |

It should be understood that the foregoing table is merely an example, a classification manner of different objects is not limited to the foregoing example, and there may be another classification manner for different objects. This is not limited in this embodiment of this application.

It should be further understood that, in this embodiment of this application, a parameter detected for an object of a category may further be based on analysis of big data. That is, most detected parameters of users for an object of a category are collected. For example, when it is collected that detected parameters of 90% users for an apple are carbohydrates, energy, and mass, the mobile phone may display carbohydrates, energy, and mass by using the touchscreen when detecting that a to-be-measured object is an apple.

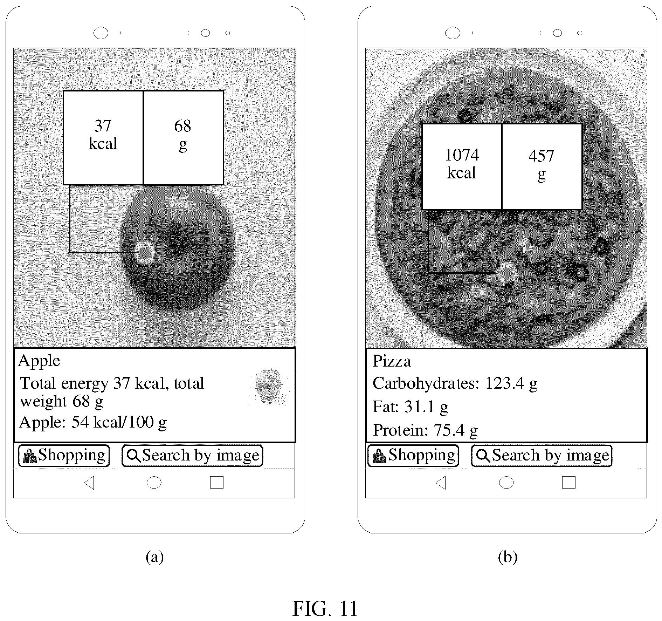

For example, as shown in (a) in FIG. 11, when the mobile phone detects that the to-be-measured object is an apple, the mobile phone may determine and display on the touchscreen that the weight of the apple is 68 g and the calorie is 37 kcal, and display that the calorie of each 100 g of apple is 54 kcal. When a to-be-measured image is switched from the apple shown in (a) in FIG. 11 to a pizza on an adjacent plate, as shown in (b) in FIG. 11, the mobile phone may display a measurement result of the pizza on the touchscreen: Weight 457 g, calorie 1074 kcal, carbohydrates 123.4 g, fat 31.3 g, and protein 75.4 g.

In this embodiment of this application, the mobile phone may classify objects of a plurality of categories in advance, and the user may learn, in a timely manner, parameter information corresponding to the objects of the categories, which helps improve user experience.

Optionally, in this embodiment of this application, when identifying that a to-be-measured object is an object of a specific category, the mobile phone may remind the user whether to continue to classify the to-be-measured object.

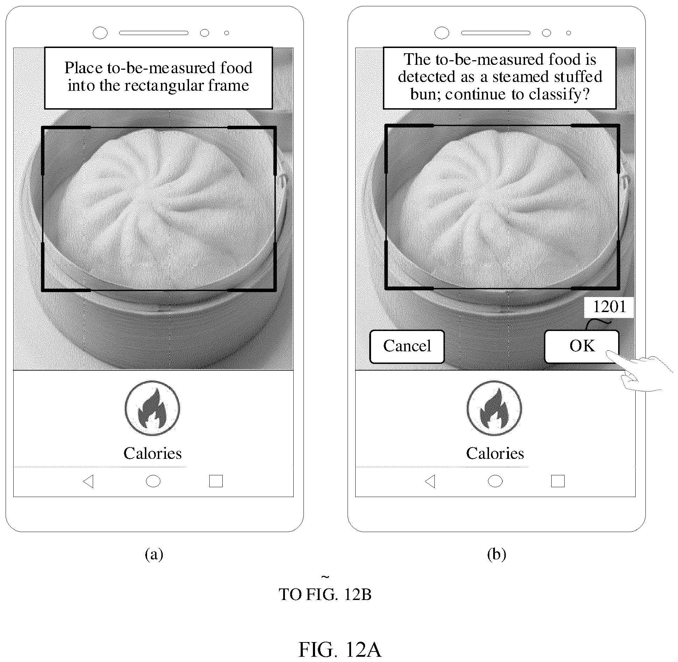

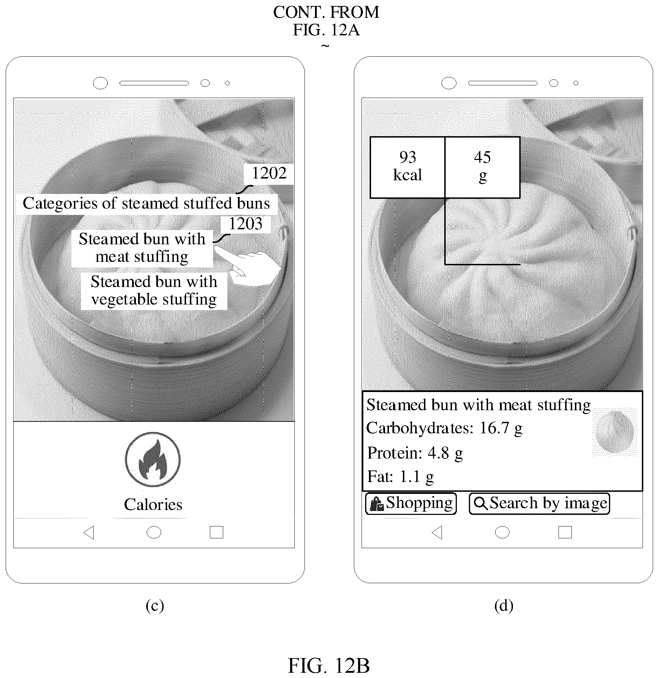

For example, as shown in (a) in FIG. 12A and FIG. 12B, the mobile phone reminds the user in a text reminder manner to place to-be-measured food in a rectangular frame. The mobile phone may determine, by extracting feature information of the to-be-measured food, that the to-be-measured food is a steamed stuffed bun. Because there are many types of steamed stuffed buns, the steamed stuffed buns may be simply divided into steamed buns with vegetable stuffing and steamed buns with meat stuffing. As shown in (b) in FIG. 12A and FIG. 12B, the mobile phone may remind the user in a text reminder manner of "The to-be-measured food is detected as a steamed stuffed bun; continue to classify?". When the mobile phone detects that the user taps a control 1201, classification information of the steamed stuffed bun may be displayed on the touchscreen. As shown in (c) in FIG. 12A and FIG. 12B, the mobile phone displays a category option 1202 of the steamed stuffed bun in a text reminder manner on the touchscreen, where the category option of the steamed stuffed bun includes a steamed bun with meat stuffing option 1203 and a steamed bun with vegetable stuffing option. When the mobile phone detects that the user taps the option 1203, the mobile phone may determine that the steamed stuffed bun in the image is a steamed bun with meat stuffing.

Because differences between calories and nutrient elements included in the steamed bun with meat stuffing and the steamed bun with vegetable stuffing are relatively great, when the mobile phone needs to correctly measure a parameter of the to-be-measured steamed stuffed bun, the mobile phone may remind the user to first classify the to-be-measured steamed stuffed bun. Table 2 shows a parameter comparison between the steamed bun with meat stuffing and the steamed bun with vegetable stuffing.

**Table 2 Parameter comparison between steamed bun with meat stuffing and steamed bun with vegetable stuffing**

| Category | Parameter (content in 100 g) | | | |
|---|---|---|---|---|
| | Carbohydrates | Protein | Fat | Calories |
| Steamed bun with meat stuffing | 37.4 g | 8.9 g | 10 g | 272 kilocalories |
| Steamed bun with vegetable stuffing | 38.4 g | 5.99 g | 0.82 g | 181 kilocalories |

It should be understood that the steamed bun with meat stuffing in Table 2 is described by using a steamed bun with pork as an example. In this embodiment of this application, a category of the steamed stuffed bun may be further subdivided into a steamed bun with pork, a steamed bun with beef, a steamed bun with mutton, a steamed bun with chive with eggs, a steamed bun with mushroom and vegetable, a steamed bun with cocozelle, or a steamed bun with carrot.

Optionally, in this embodiment of this application, the mobile phone may classify an object of a category in advance. When detecting an object of the category, the mobile phone may continue to remind the user to continue to classify the object. For example, the object that needs to continue to be classified includes a steamed stuffed bun, a dumpling, a pie, or a mooncake.

The foregoing describes several GUIs for measuring one object in this embodiment of this application with reference to FIG. 3A to FIG. 12B. The following describes a GUI for measuring a plurality of objects with reference to the accompanying drawings.

The following uses an example in which there are two to-be-measured objects for description.

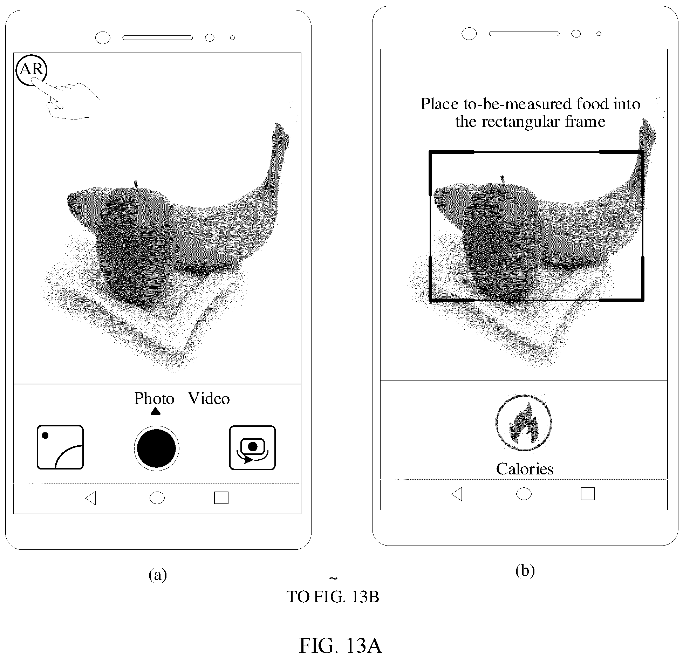

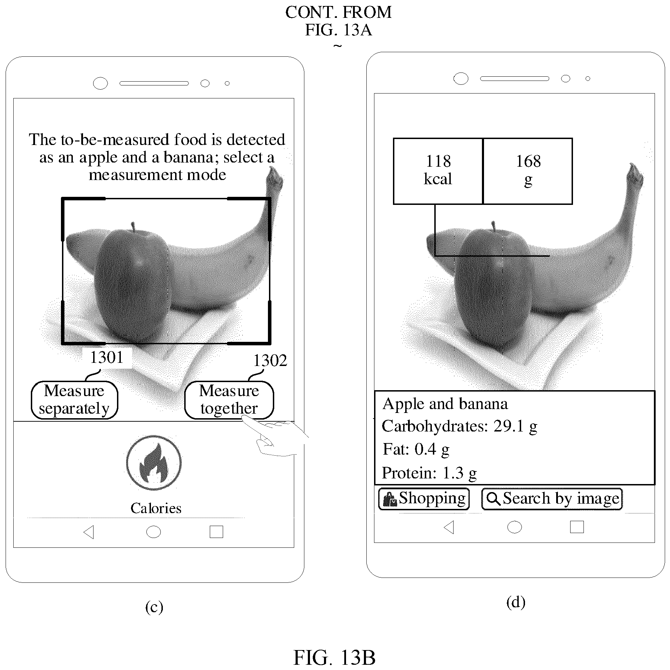

In an embodiment, as shown in (a) in FIG. 13A and FIG. 13B, the mobile phone is in a photographing mode. After the mobile phone detects an operation that the user taps a control of the AR measurement mode, the mobile phone enters the AR measurement mode. As shown in (b) in FIG. 13A and FIG. 13B, when the mobile phone detects a to-be-measured object in a rectangular frame, the mobile phone may remind the user in a text (or voice) reminder manner of "The to-be-measured food is detected as an apple and a banana; select a measurement mode". The measurement mode may include "measure separately" and "measure together". As shown in (c) in FIG. 13A and FIG. 13B, when the mobile phone detects an operation that the user taps a control 1302, the mobile phone starts to measure parameters of the apple and the banana. As shown in (d) in FIG. 13A and FIG. 13B, after parameter measurement ends, the mobile phone may display a parameter measurement result on the touchscreen. For example, the parameter measurement result is a total measurement result, such as a total weight, total calories, total carbohydrates, total fat, and total protein content of the apple and the banana.

It should be understood that in this embodiment of this application, the mobile phone may separately determine parameter information respectively corresponding to the apple and the banana first, and finally present total parameter information to the user. For example, as shown in Table 3, the mobile phone may calculate total parameters after separately determining the parameter information of the apple and the banana.

**Table 3 Parameter information detected by mobile phone**

| | Parameter | | | | |
|---|---|---|---|---|---|
| | Weight | Calories | Carbohydrates | Fat | Protein |
| Apple | 93 g | 68 kcal | 12.6 g | 0.2 g | 0.2 g |
| Banana | 75 g | 50 kcal | 16.5 g | 0.2 g | 1.1 g |
| Total parameter | 168 g | 118 kcal | 29.1 g | 0.4 g | 1.3 g |

Optionally, the mobile phone may determine parameters of the apple and the banana by detecting the category and/or the mass information of the objects that are input by the user in a window.

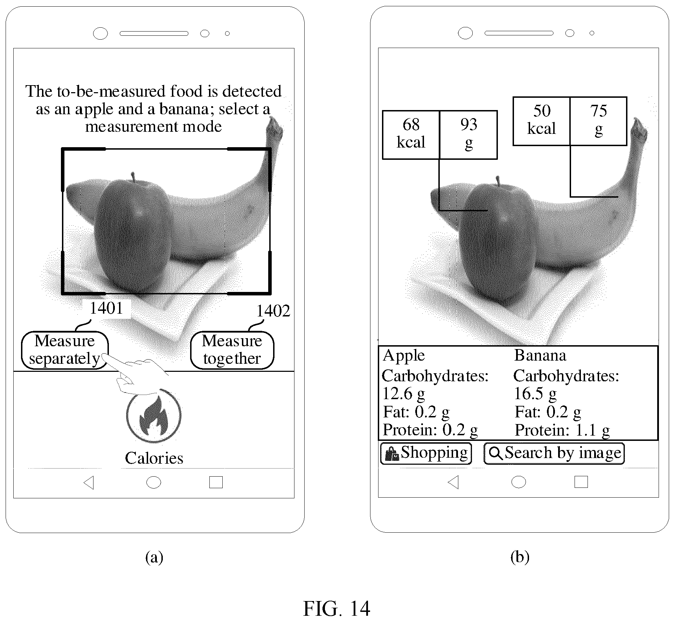

In another embodiment, as shown in (a) in FIG. 14, after the mobile phone determines that total to-be-measured objects in the rectangular frame are an apple and a banana, the mobile phone may remind the user in a text (or a voice) reminder manner of "The to-be-measured food is an apple and a banana; whether to separately measure them". After detecting an operation that the user taps a control 1401, the mobile phone may separately detect parameters of the apple and the banana. As shown in (b) in FIG. 14, after the detection is completed, the mobile phone may separately display a parameter measurement result of the apple and a parameter measurement result of the banana on the touchscreen.

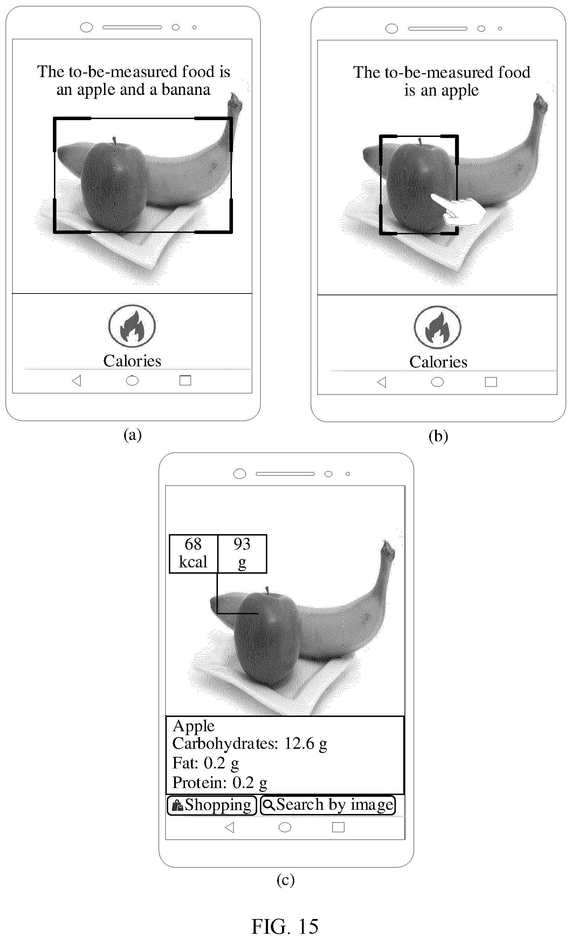

In another embodiment, as shown in (a) in FIG. 15, the user places the apple and the banana in the rectangular frame, and the mobile phone may determine that categories of the to-be-measured objects in the rectangular frame are apple and banana. As shown in (b) in FIG. 15, after the mobile phone detects an operation that the user taps the apple, the mobile phone may shrink the rectangular frame into a region in which the apple is located. As shown in (c) in FIG. 15, after the detection is completed, the mobile phone may separately display a parameter measurement result of the apple on the touchscreen.

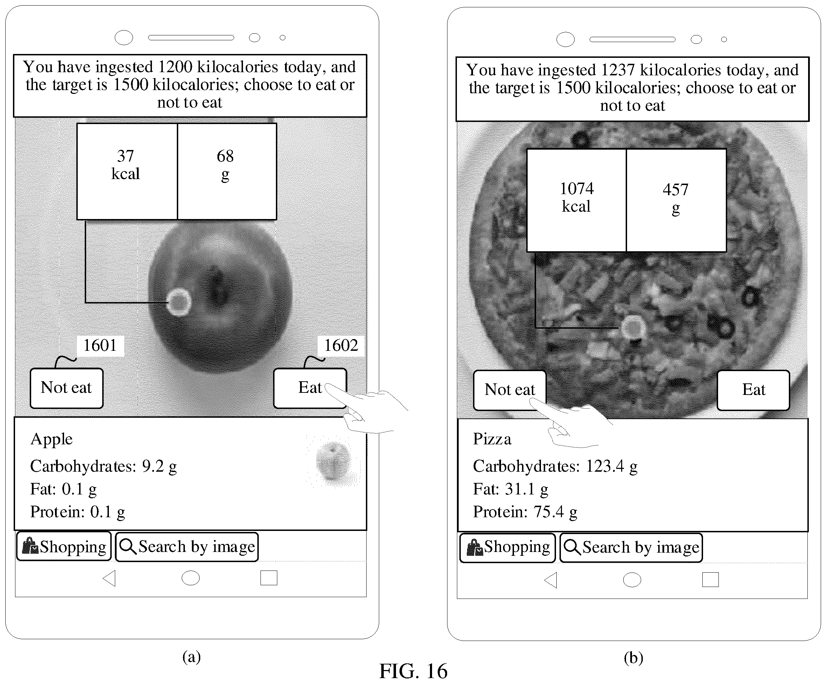

FIG. 16 shows another group of GUIs provided in this embodiment of this application. As shown in (a) in FIG. 16, after mass and energy information of the to-be-measured object are displayed, the user may further be reminded in a text reminder (or a voice reminder) manner of "You have ingested 1200 kilocalories today, and a target is 1500 kilocalories; choose to eat or not to eat". After detecting that the user taps a control 1602, the mobile phone may determine that the user chooses to ingest the apple, and the energy ingested today changes to 1237 kilocalories. After a period of time, the user may detect a parameter of a pizza, as shown in (b) in FIG. 16. The mobile phone may display the parameters of the pizza on the touchscreen as "mass 457 g, calories 1074 kcal", and display on the touchscreen "You have ingested 1237 kilocalories today, and the target is 1500 kilocalories; choose to eat or not to eat". After seeing this reminder, the user may determine that the target ingestion of calories today will be exceeded if the pizza is eaten. After detecting an operation that the user taps a control 1601, the mobile phone may determine that the user will not ingest the pizza, and the calories ingested today remain at 1237 kilocalories. When detecting a parameter of an object next time, the mobile phone may continue to remind the user on the touchscreen of "You have ingested 1237 kilocalories today, and the target is 1500 kilocalories; choose to eat or not to eat".

Optionally, the user may set a target value of a parameter to be ingested each day in advance in the mobile phone.

It should be understood that, in this embodiment of this application, another parameter, such as protein and fat content, that the user has ingested may be reminded by using a text, and the user may determine whether the parameter ingested today exceeds a standard.

According to the method for estimating an object parameter in this embodiment of this application, a total quantity of energy ingested today and energy of current to-be-measured food are displayed in real time, which helps the user determine whether ingested energy exceeds a standard.

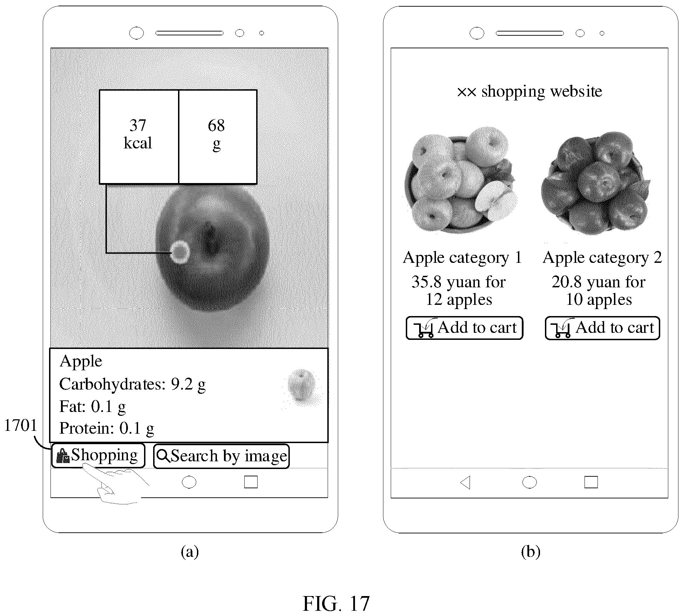

FIG. 17 shows another GUI according to an embodiment of this application. As shown in (a) in FIG. 17, when the mobile phone detects a parameter of an apple and displays the parameter to the user by using the touchscreen, the user may choose to purchase current to-be-measured food. As shown in (b) in FIG. 17, when the user detects that the user taps a control 1701, the mobile phone may be linked to "×× shopping website", so that the user conveniently purchases the object.

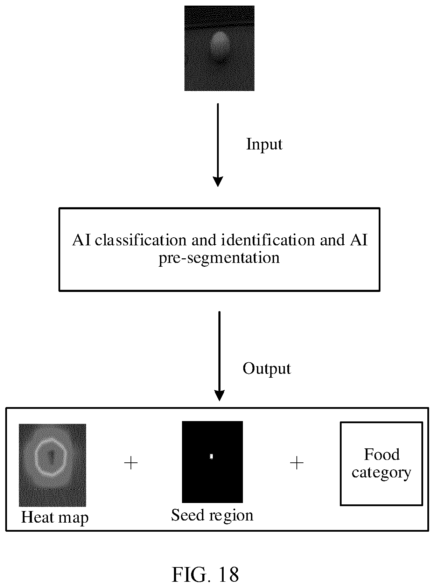

With reference to FIG. 18 to FIG. 23, the following describes a specific implementation process of determining a category and a parameter of a to-be-measured object in the embodiments of this application.

FIG. 18 is a schematic diagram of an AI classification training-based process according to an embodiment of this application. As shown in FIG. 18, a mobile phone detects that an image collected by a current camera includes a to-be-measured object on a desktop. The mobile phone may use the image that includes the to-be-measured object as an input, and identify a feature of the to-be-measured object in the image by using AI classification training, to determine a category of the to-be-measured object and determine a heat map of the image.

Deep learning (one of AI classification training) is used. A deep learning algorithm identifies the category of the to-be-measured object by using a machine learning principle, that is, a deep learning network determines a feature of an object of a known category in several images in advance, and records the category of the object and a known feature in the deep learning network. When the mobile phone needs to determine the category of the to-be-measured object, the mobile phone inputs the image of the to-be-measured object into the deep learning network, extracts the feature of the to-be-measured object in the image from the depth learning network, compares the feature of the to-be-measured object with a feature of an object of a known category stored in the deep learning network, and finally determines a category of an object closest to the feature of the to-be-measured object, that is, the category is the category of the to-be-measured object.

For example, when the mobile phone compares a feature point in the image of the to-be-measured object with features of a plurality of fruits in the deep learning network, the mobile phone finally determines that the category of the to-be-measured object is orange.

For another example, as shown in (b) in FIG. 6, when the user aligns the rectangular frame in the mobile phone with the object in the plate, the mobile phone may determine, in a deep learning manner, that the category of the to-be-measured object is apple, and as shown in (c) in FIG. 6, present the detected category information to the user in a text reminder manner.

For another example, as shown in (b) in FIG. 13A and FIG. 13B, the mobile phone may determine, in a deep learning manner, that the categories of the to-be-measured objects are banana and apple, and as shown in (c) in FIG. 13A and FIG. 13B, present the detected category information to the user by using the touchscreen in a text reminder manner.

The mobile phone may determine a heat map corresponding to a current image, where the heat map is used to indicate distribution of energy of an object in the image, and different colors of the heat map are used to indicate different energy regions in the image. When extracting a region in which the to-be-measured object is located, the mobile phone may first obtain a heat map of the entire image, and then frame a region in which energy is greater than a confidence level in the heat map of the entire image, as the region of the to-be-measured object. The confidence level is a thermal value specified based on experience. When a thermal value of a region in the image exceeds a preset confidence level, it may be considered that the region includes a to-be-measured object.

Optionally, the mobile phone may also extract a heat map of an image in a deep learning manner. The deep learning network also needs to perform feature extraction on images of objects of different heat in advance, and store features of the objects of different heat in the image, so as to determine heat corresponding to the to-be-measured object based on the feature of the to-be-measured object in the image.

Optionally, the mobile phone may further determine a seed region. The seed region may be used to determine a location of a to-be-measured object. Subsequently, the mobile phone may choose to segment a region of the to-be-measured object from the seed region during secondary segmentation, and the seed region may be further used to subsequently measure a depth distance from a camera to the object. The mobile phone may calculate a distance between the camera and a region adjacent to the seed region.

It should be understood that the method for determining the category of the to-be-measured object in the deep learning manner provided in this embodiment is merely an example, and the deep learning algorithm is not specifically limited. For an unlisted part of the algorithm, reference may be made to the method in the art for calculation.

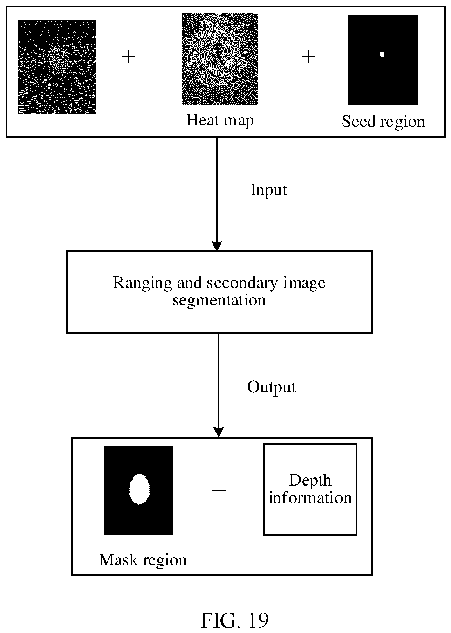

FIG. 19 is a schematic diagram of a process of obtaining a mask (mask) region and laser ranging according to an embodiment of this application. As shown in FIG. 19, a heat map, a seed region, and an image of a to-be-measured object that are output in FIG. 18 may be used as an input of the mobile phone. The heat map may be divided into mask regions by using an image segmentation method, and a distance between the camera and the to-be-measured object is measured by using a preset ranging method.

To more effectively extract an area of the to-be-measured object in the image, secondary segmentation may be further performed on a region determined by the heat map. Secondary segmentation may be performed on an object and a background on a boundary of the to-be-measured object based on different colors in the framed region, to obtain a mask (mask) region. As shown in FIG. 19, a black region in the mask region is the background, and a white region is the region of the to-be-measured object.

In this embodiment of this application, the preset ranging manner includes one or more of the following:
(1) determining a depth of the to-be-measured object by using a parallax of a multi-view camera (for example, a binocular camera or a trilocular camera) of the mobile phone;
(2) determining a depth of the to-be-measured object by using an automatic focus (automatic focus, AF) camera of the mobile phone;
(3) determining a depth of the to-be-measured object by performing laser ranging by using a sensor of the mobile phone;
(4) determining a depth of the to-be-measured object by using a time of flight (time of flight, TOF) of the camera of the mobile phone; and
(5) determining a depth of the to-be-measured object by using structured light of the camera of the mobile phone.

Optionally, in this embodiment of this application, the mobile phone may first determine a preset ranging manner. For example, the mobile phone may first determine environment information for photographing the to-be-measured object, and then determine, by using the environment information, a ranging manner to be used.

For example, when the mobile phone estimates that the depth of the to-be-measured object, that is, a distance between the mobile phone and the to-be-measured object is within 15 cm, the mobile phone may determine, in a laser ranging manner, an actual depth of the to-be-measured object, that is, an actual exact distance between the mobile phone and the to-be-measured object. When the depth of the to-be-measured object is estimated to be greater than 15 cm, the mobile phone determines the actual exact distance between the mobile phone and the to-be-measured object in a dual-camera parallax manner.

For another example, when photographing the to-be-measured object in poor light, the mobile phone determines the depth of the to-be-measured object in a laser ranging manner, or when photographing the to-be-measured object in strong light that affects laser, the mobile phone determines the depth of the to-be-measured object in a dual-camera parallax manner.

Optionally, the mobile phone may perform measurement in any several manners of the foregoing plurality of ranging manners to obtain a plurality of depth measurement results. The mobile phone may determine a final depth with reference to the plurality of measurement results.

For example, the mobile phone may measure the depth in the laser ranging manner and the dual-camera parallax manner, to obtain a first depth value and a second depth value, and the mobile phone may use an average value of the first depth value and the second depth value as a final depth value.

It should be understood that the method for determining the depth between the mobile phone and the to-be-measured object by using a parallax of dual cameras and the method for determining the depth between the mobile phone and the to-be-measured object by using a laser ranging method are the prior art. For brevity, details are not described herein again.

It should be further understood that, in this embodiment of this application, the preset ranging manner may alternatively be another ranging manner. Selection of the ranging manner in this embodiment of this application is not limited to the foregoing several manners.

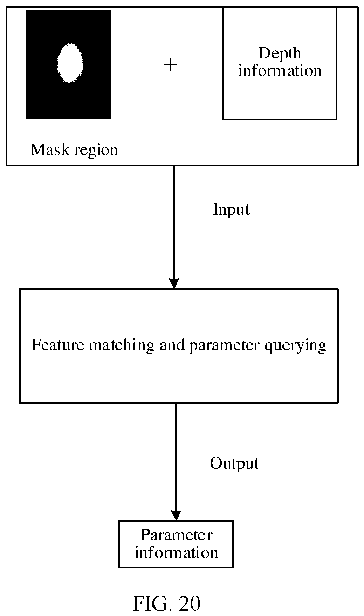

FIG. 20 is a schematic diagram of a process of obtaining a parameter of a to-be-measured object according to an embodiment of this application. As shown in FIG. 20, the area and the measured depth value that are of the object in the mask region and that are output from FIG. 19 are used as an input of the mobile phone, and a final parameter value is determined in a feature querying manner.

A parameter value includes calorie, mass (or volume), a nutrient element, or the like.

The nutrient element includes but is not limited to carbohydrates, protein, fat, a vitamin (for example, vitamin A, vitamin B1, vitamin B2, vitamin B5, vitamin C, and vitamin E), or a dietary fiber.

Optionally, in this embodiment of this application, the feature querying process includes:
(1) determining a category of the to-be-measured object;
(2) querying a relationship between a depth value and an area of an object of this category stored in the mobile phone; and
(3) performing feature matching to determine a parameter of the object (or another parameter of the object).

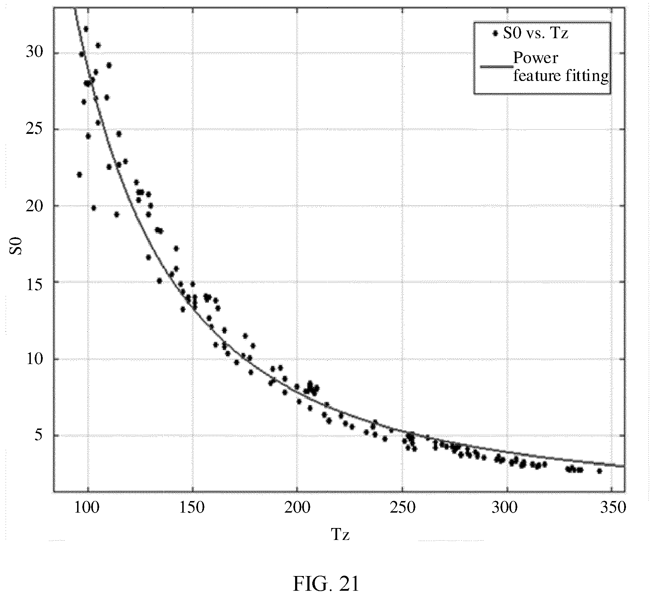

For example, the mobile phone first determines that the to-be-measured object is an apple, and then queries a relationship between a depth value and an area stored in the mobile phone. FIG. 21 is a schematic diagram of a relationship between a depth and an area that are corresponding to an apple according to an embodiment of this application. The schematic diagram shown in FIG. 21 shows a curve that is of a -2 power relationship in the foregoing relationship and that can be fitted by using actually measured data of the depth and the area of the object. Specifically, S₀ represents an area occupied by the object in the image, and Tz represents a depth of the object in the image.

When determining the relationship between the depth and the area of the object, the device may photograph objects of a same parameter and a same category from different depths, and determine a relationship between an area and a depth of a same object from the photographed images. For example, in FIG. 21, that the to-be-measured object is an apple is used as an example, an apple with mass of 100 grams (g) is selected for photographing. In an image photographed by the mobile phone at a depth of 100 millimeters away from the apple, an area displayed by the apple in a mask region is 30 square centimeters, it is obtained that a relationship between a depth and an area of the apple with mass of 100 g is (100, 30), and this point is recorded in FIG. 21. Similarly, in an image obtained by photographing the same apple or another apple with mass of 100 g by the mobile phone at a depth of 200 millimeters away from the apple, an area displayed by the apple in a mask region is 8 square centimeters, a relationship (200, 8) between another depth and an area may be obtained for the apple, and this point is recorded in FIG. 21. Relationships between all depths and areas obtained by photographing a same apple based on different depths are recorded in FIG. 21. A curve may be obtained by fitting the relationships between all the depths and the areas. It may be learned from FIG. 21 that the curve is the -2 power relationship that is between a depth and an area and that is derived from the foregoing formula. Optionally, the foregoing fitting method may use a fitting manner such as a least square method, an interpolation method, or an approximation method commonly used in the prior art, which is not limited herein.

Further, in the foregoing embodiment, for objects of a same category, when parameters of the objects are the same, an area occupied by the object in an image photographed by the device on the object is in a -2 power relationship with a depth from the device to the object when the image is photographed. When the device queries a parameter of an object by using a mapping relationship, in a correspondence among a category, an area, a depth, and a parameter of the object stored in the mapping relationship, the correspondence may be in a form of "category-area and depth relationship curve-parameter".

It should be understood that in this embodiment of this application, the mobile phone may collect areas of objects of a same category and a same parameter in photos of different depths in advance, establish a correspondence among a category, an area, a depth, and a parameter of an object, finally determine correspondences of different categories and parameters, and add all the determined correspondences to a mapping relationship, so that the mobile phone queries a parameter of a to-be-measured object.

For example, if an object is an apple and a parameter is a mass parameter, a correspondence may be "apple-area and depth relationship curve 1-100 g" and "apple-area and depth relationship curve 2-130 g". After the to-be-measured object obtained by the device is data of "apple-35 square centimeters-10 centimeters", an area-depth relationship is substituted into the area-depth relationship curve 1 and relationship curve 2 in the correspondence. If the relationship between the area and the depth of the to-be-measured object meets the relationship curve 1, it is determined that the mass of the to-be-measured apple is 100 g.

Optionally, after a parameter of the to-be-measured object is determined by using the "category-area and depth relationship curve-parameter", another to-be-measured parameter may be further determined in a mapping table manner. Taking the apple as an example, after it is determined that the mass of the apple is 100 g, another parameter of the to-be-measured object may be further determined in a manner of querying Table 4.

**Table 4 Mapping table of another parameter of apple**

| Parameter | Content |
|---|---|
| Calories | 54 kilocalories |
| Protein | 0.2 g |
| Carbohydrates | 13.5 g |
| Fat | 0.2 g |
| Dietary fiber | 1.2 g |
| Carotene | 20 µg |
| Nicotinic acid | 0.2 mg |
| Vitamin B 1 | 0.06 mg |
| Vitamin C | 4 mg |
| Vitamin E | 2.12 mg |

For example, as shown in (d) in FIG. 3Aand FIG. 3B, after it is determined that the mass of the apple is 68 g by using the "apple-area and depth relationship curve-mass", data such as 37 kilocalories, 0.1 g of protein, and 9.2 g of carbohydrates of the apple may be obtained by querying Table 1, and is displayed to the user by using the touchscreen.

For example, the parameter of the to-be-measured object may be alternatively energy of the object. The mapping relationship includes "category-area-depth-energy": a correspondence among a category, an area, a depth, and energy of an apple, and a correspondence among a category, an area, a depth, and energy of a pear. There may be a plurality of different correspondences of objects of a same category. Taking an apple as an example, a correspondence among a category, an area, a depth, and energy of the apple may include: "apple-20 square centimeters-20 centimeters-52 kilocalories" and "apple-35 square centimeters-10 centimeters-70 kilocalories".

In the foregoing example, more specifically, a possible implementation is as follows: The mapping relationship includes correspondences: "apple-30 square centimeters-10 centimeters-52 kilocalories", "apple-20 square centimeters-20 centimeters-52 kilocalories", "apple-35 square centimeters-10 centimeters-70 kilocalories", and "apple-10 square centimeters-39 centimeters-94 kilocalories". When the electronic device measures the energy parameter of the apple, the electronic device determines that the category of the to-be-measured object in the image is apple, determines that the area of the to-be-measured object in the image is 20 square centimeters, and determines that the depth of the to-be-measured object in the image is 20 centimeters. The electronic device compares the correspondence of the foregoing three determined parameters "apple-20 square centimeters-20 centimeters" with a correspondence in the mapping relationship. Therefore, the first three parameters of the second correspondence "apple-20 square centimeters-20 centimeters-52 kilocalories" in the foregoing mapping relationship match the three obtained parameters through comparison, it is determined that the correspondence among the category, the area, the depth, and the energy of the to-be-measured apple is "apple-20 square centimeters-20 centimeters-52 kilocalories", and further, the electronic device determines that the energy parameter of the to-be-measured object apple is 52 kilocalories.

In conclusion, in the method for estimating an object parameter provided in this embodiment, the category of the to-be-measured object is determined; the area of the to-be-measured object in the image is determined; the depth of the to-be-measured object is determined, where the depth of the to-be-measured object is the distance from the electronic device to the to-be-measured object when the electronic device used for shooting an image shoots the image; and the parameter of the to-be-measured object may be determined based on the category of the to-be-measured object, the area of the to-be-measured object, and the depth of the to-be-measured object. Impact of a photographing distance on the parameter of the to-be-measured object is included in a measurement range, and the parameter of the to-be-measured object is jointly determined based on the category of the to-be-measured object, and the area and the depth of the to-be-measured object in the image, thereby improving accuracy of measuring the object parameter.

Further, in the foregoing embodiment, because the electronic device needs to search the mapping relationship to determine the correspondence among the category of the to-be-measured object, the area of the to-be-measured object, the depth of the to-be-measured object, and the parameter of the to-be-measured object, so as to determine the parameter of the to-be-measured object, the mapping relationship needs to be determined in advance and stored in the device. To enable the electronic device to determine that a correspondence exists in the mapping relationship when determining the parameter of the to-be-measured object, the correspondence needs to cover a possible parameter range of the to-be-measured object as much as possible, so as to improve accuracy of the parameter determined by the device. Therefore, different categories of objects need to be determined, and areas and depths that are in the correspondence and that are of objects of a same category in a case of different parameters need to be determined. That is, the method in the foregoing embodiment further includes: determining, by the electronic device, a correspondence among a category, an area, a depth, and a parameter of at least one object, and determining a mapping relationship based on the determined correspondence.

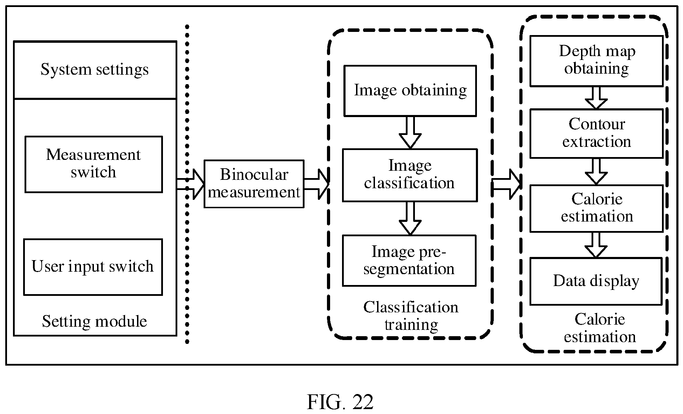

Optionally, this embodiment further provides a system for implementing the foregoing method. FIG. 22 is a schematic structural diagram of a parameter measurement system according to this application. The system provided in this embodiment may be configured to implement the method for measuring an object parameter in any one of the foregoing embodiments. Based on the foregoing method, an AR measurement switch in a setting module in the system shown in FIG. 22 is configured to implement enabling and disabling of the method for measuring an object parameter in a device. If the AR measurement switch is enabled, function modules in the system framework, such as a binocular measurement function, classification segmentation, contour extraction, and calorie estimation, may be configured to measure a parameter of an object. After obtaining an image of to-be-measured food, the device may determine a parameter value of the to-be-measured object based on the image (for example, the parameter is an energy unit calorie of the object herein). On the contrary, if the AR measurement switch is disabled, the foregoing method for measuring an object parameter is disabled. If a user input switch is enabled, when the device cannot accurately determine a category of the to-be-measured object, the device may obtain the category of the to-be-measured object that is input by a user of the device. A binocular measurement module is configured to calculate depth and parallax information of a spatial point based on a stereo vision principle; an image classification module is configured to determine the category of the to-be-measured object by using deep learning; an image pre-segmentation module and a contour extraction module are configured to determine an area of the to-be-measured object in the image based on a heat map algorithm. A depth map obtaining module is configured to obtain a depth of the to-be-measured object obtained by the binocular measurement module, where the depth of the to-be-measured object may be recorded by using 10-bit data, the first eight bits store integer information, and the last two bits store decimal information. A higher depth precision indicates better depth accuracy. A calorie estimation module is configured to determine a parameter of the to-be-measured object based on the category of the to-be-measured object, the area of the to-be-measured object, and the depth of the to-be-measured object.

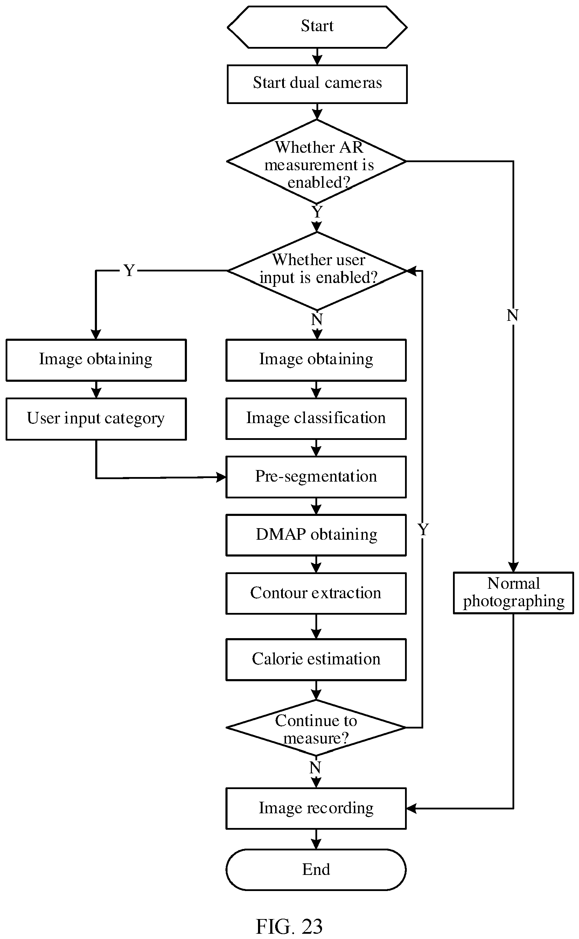

FIG. 23 is a schematic flowchart of a parameter measurement system process according to this application. The process shown in FIG. 23 may be executed in the system shown in FIG. 22. After the system in the device starts dual cameras, the system first determines whether an AR measurement calorie function is enabled, and if the AR measurement calorie function is disabled, records an image in the device after normal photographing, and ends the program; or if the AR measurement calorie function is enabled, the system in the device continues to execute the program for measuring an object parameter. In the program for measuring an object parameter, it is first determined whether a user input function switch is enabled, and if the user input function switch is enabled, a category of a to-be-measured object that is input by a user of the device is obtained; or if the user input function switch is disabled, the category of the to-be-measured object in the image is determined based on the method in the foregoing embodiment. After the category of the to-be-measured object is determined, a range of the to-be-measured object in the image is determined based on a heat map algorithm; an area of the to-be-measured object in the image is further determined by using a depth map and image color information; and finally, calorie estimation of the to-be-measured object is determined based on the category of the to-be-measured object, the area of the to-be-measured object, and the depth of the to-be-measured object by using an "empirical ratio method" in the foregoing embodiment.

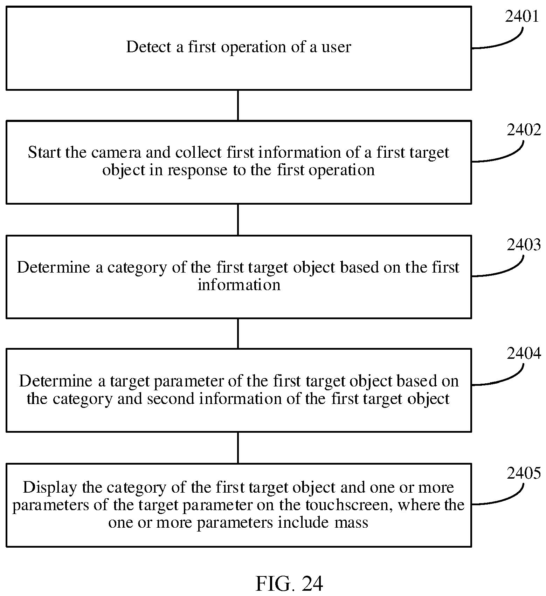

With reference to the foregoing embodiments and related accompanying drawings, an embodiment of this application provides a method for estimating an object parameter. The method may be implemented in an electronic device (for example, a mobile phone or a tablet computer) having a touchscreen and a camera in FIG. 1A, FIG. 1B, and FIG. 2. As shown in FIG. 24, the method may include the following steps.

S2401. Detect a first operation of a user.

For example, the first operation may be that the user taps the control 305 in (b) in FIG. 3A and FIG. 3B, or may be that the user taps the control in (a), (b), or (c) in FIG. 4A and FIG. 4B.

S2402. Start the camera and collect first information of a first target object in response to the first operation.

For example, the first information may be feature information of the first target object.

Optionally, the feature information includes but is not limited to a color, a shape, a surface feature, or the like of the first target object. The first information may be used by the electronic device to determine a category of the first target object.

S2403. Determine a category of the first target object based on the first information.

It should be understood that a process of determining the category of the first target object by using the first information may be the same as the process of determining the category of the to-be-measured object in FIG. 18. For brevity, details are not described herein again.

S2404. Determine a target parameter of the first target object based on the category and second information of the first target object.

Optionally, the second information is a depth of the first target object and an area of the first target object in an image collected by the camera.

Specifically, the electronic device may determine the target parameter of the first target object based on the category, the depth, and the area of the first target object.

Optionally, the second information is 3D model information of the first target object.

Specifically, the electronic device may determine a volume of the first target object by establishing a 3D model of the first target object, so as to calculate mass and another parameter of the first target object.

S2405. Display the category of the first target object and one or more parameters of the target parameter on the touchscreen, where the one or more parameters include mass.

For example, as shown in (d) in FIG. 3A and FIG. 3B, after detecting the category of the first target object and target parameter information, the electronic device may display, on the touchscreen, the category of the first target object as "apple", and the one or more parameters as "energy 37 kcal, mass 68 g, carbohydrates 9.2 g, fat 0.1 g, and protein 0.1 g".

Optionally, the determining a target parameter of the first target object based on the category and second information of the first target object includes: determining, by using pre-stored information or an augmented reality AR model, the target parameter that matches the category and the second information of the first target object.

Optionally, the second information is an AR three-dimensional model of the first target object collected by using the camera. The electronic device may determine an estimated volume of the first target object by using the three-dimensional model, calculate the mass of the first target object by using density, and determine the target parameter by using parameter information of a unit of the first target object.

Optionally, the second information includes the depth of the first target object and the area of the first target object in the image collected by the camera, and the depth of the first target object is a distance from the electronic device to the first target object when the electronic device photographs the first target object.

Optionally, the pre-stored information is a mapping relationship, and before the target parameter of the first target object is determined, the method further includes: determining a correspondence among a category, an area, a depth, and a parameter of at least one object; and determining the mapping relationship based on the correspondence among the category, the area, the depth, and the parameter of the at least one object.

Optionally, the correspondence among the category, the area, the depth, and the parameter of the at least one object includes: a proportional relationship between the area and the depth of the at least one object when the at least one object has a same category and a same parameter.

Optionally, the area and the depth of the object are in a linear or non-linear relationship.

Optionally, the area and the depth of the object are inversely proportional, and the photographing distance and the area are in a -2 power relationship.

It should be understood that the foregoing process of determining the target parameter of the first target object by using the category, the area, and the depth of the first target object is the same as the foregoing processes shown in FIG. 19 and FIG. 20. For brevity, details are not described herein again.

According to the method for estimating an object parameter in this embodiment of this application, the electronic device may pre-store the mapping relationship among the category, the area, the depth, and the parameter of the at least one object, and search, by using the pre-stored mapping relationship, for the target parameter that matches the current to-be-measured first target object, thereby helping improve accuracy of measuring an object parameter.

Optionally, the method further includes:
reminding the user to input mass of the first target object; where
for example, as shown in (a) in FIG. 8A and FIG. 8B, the mobile phone may display the window 801 on the touchscreen, so as to remind the user to input the weight of the to-be-measured food;
detecting a second operation that the user inputs the mass of the first target object; where
for example, as shown in (b) in FIG. 8A and FIG. 8B, the electronic device detects that the user inputs the weight "68 g" of the to-be-measured food in the window 801, and detects an operation that the user taps the control 802; and
determining the mass of the first target object in response to the second operation.

For example, after detecting the foregoing operation of the user, the electronic device may determine that the weight of the to-be-measured food is 68 g.

The determining a target parameter of the first target object based on the category and second information of the first target object includes:
determining the target parameter of the first target object based on the category of the first target object and the mass of the first target object.

According to the method for estimating an object parameter in this embodiment of this application, by reminding the user to input the mass of the to-be-measured object, an error in a process of measuring the mass by the electronic device can be avoided, thereby improving accuracy of measuring an object parameter.

Optionally, the determining a target parameter of the first target object includes: determining that the category of the first target object is a first category, where the method further includes:
reminding the user to determine whether the first category is accurate; where
for example, similar to that in (b) in FIG. 6, the mobile phone may remind the user on the touchscreen in a text reminder manner to determine whether the detected category of the to-be-measured food is accurate (for example, the user may be reminded of "The to-be-measured food is detected as pomegranate; is it accurate?");
when it is detected that the user determines that the first category is inaccurate, reminding the user to input the category of the first target object; where
for example, as shown in (b) in FIG. 6, when the mobile phone detects that the user taps the control 601, the mobile phone may learn that the user considers that the detected category of the object is inaccurate; as shown in (b) in FIG. 7A and FIG. 7B, the mobile phone may remind the user to input the category of the first target object;
detecting a third operation that the user inputs a second category of the first target object; where
for example, as shown in (c) in FIG. 7A and FIG. 7B, the mobile phone detects that the user inputs the category "apple" of the to-be-measured food in the window 703, and detects that the user taps the control 704; and
determining the second category as the category of the first target object in response to the third operation, where for example, after detecting the foregoing operation, the mobile phone may determine that the category of the measured food is "apple".

In the method for estimating an object parameter in this embodiment of this application, when detecting the category of the to-be-measured object, the electronic device may remind the user of the detected category of the to-be-measured object, which helps the user determine whether the category detected by the mobile phone is accurate. When the detection is inaccurate, the mobile phone may continue to perform detection or an accurate category is manually input, which helps avoid inaccurate subsequent parameter measurement due to a category detection error.

Optionally, the displaying the category of the first target object and one or more parameters of the target parameter on the touchscreen includes: displaying one or more parameters of the target parameter on the touchscreen based on the category of the object.

For example, the mobile phone may classify categories of a plurality of objects. As shown in (a) in FIG. 11, when the mobile phone detects that the to-be-measured food is an apple, because the apple belongs to fruits, the mobile phone may detect energy and mass of the apple.

For example, as shown in (b) in FIG. 11, when detecting that the to-be-measured food is a pizza, the mobile phone may detect energy, mass, carbohydrates, protein, and fat content of the pizza.

In the method for estimating an object parameter in this embodiment of this application, the electronic device may classify objects of a plurality of categories in advance, and the user may learn, in a timely manner, parameter information corresponding to the objects of the categories, which helps improve user experience.

Optionally, before the displaying the category of the first target object and one or more parameters of the target parameter on the touchscreen, the method further includes:
detecting a sixth operation of the user; where
for example, as shown in (a) in FIG. 9A and FIG. 9B, the mobile phone may remind the user to select a to-be-detected parameter in a text reminder manner, and the sixth operation may be an operation that the user taps the control 902;
displaying a first window on the touchscreen in response to the sixth operation, where the first window includes one or more parameters used to remind the user to select the target parameter that needs to be detected; where
for example, as shown in (b) in FIG. 9A and FIG. 9B, the mobile phone may display the window 903 on the touchscreen, and the window 903 includes a plurality of parameters that can be detected, for example, mass, energy, carbohydrates, fat, protein, cholesterol, and vitamin C;
detecting a seventh operation used by the user to select the target parameter; and
determining, in response to the seventh operation, to detect the one or more parameters of the first target object.

For example, as shown in (b) in FIG. 9A and FIG. 9B, the user may slide the slider 904 corresponding to the parameter. After the mobile phone detects an operation that the user taps the control 905, the mobile phone may determine that the user wants to display mass, energy, carbohydrates, fat, and protein content of the apple.

In some possible implementations, the detecting a first operation of the user includes: detecting the first operation that the user taps a first control. The first control is located on a desktop of the electronic device, a camera interface of the electronic device, a lock screen of the electronic device, or a local search interface of the electronic device.

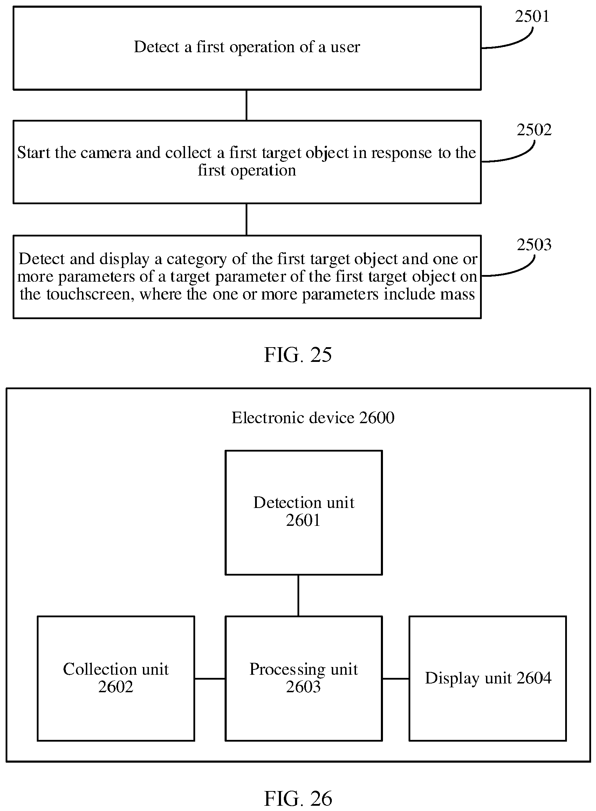

FIG. 25 shows a method for estimating an object parameter according to an embodiment of this application, and the method is applied to an electronic device having a touchscreen and a camera. The method includes:
S2501. Detect a first operation of a user.

For example, the first operation may be that the user taps the control 305 in (b) in FIG. 3A and FIG. 3B, or may be that the user taps the control in (a), (b), or (c) in FIG. 4A and FIG. 4B.

S2502. Start the camera and collect a first target object in response to the first operation.

For example, as shown in (c) in FIG. 3A and FIG. 3B, the mobile phone may start the camera and collect the to-be-measured apple.

S2503. Detect and display a category of the first target object and one or more parameters of a target parameter of the first target object on the touchscreen, where the one or more parameters include mass.

For example, as shown in (d) in FIG. 3 A and FIG. 3B, the mobile phone may detect the category and the target parameter of the first target object, and display the category of the first target object as "apple" and the mass "68 g" of the apple by using the touchscreen.

Optionally, when the category of the first target object and a plurality of parameters of the target parameter of the first target object are displayed on the touchscreen, the plurality of parameters further include energy and/or nutrient element content of the first target object.

For example, as shown in (d) in FIG. 3A and FIG. 3B, the mobile phone may further display carbohydrates, protein, and fat content of the apple on the touchscreen.

Optionally, before the displaying the category of the first target object and one or more parameters of the target parameter on the touchscreen, the method further includes:
reminding the user to input the category of the first target object; detecting a second operation that the user inputs the first target object; and determining the category of the first target object in response to the second operation.

For example, as shown in (b) in FIG. 7A and FIG. 7B, the mobile phone may remind the user on the touchscreen of "Input the category of to-be-measured food". After detecting that the user inputs the category "apple" of the first target object, and detecting an operation that the user taps the control 704, the mobile phone may determine that the category of the first target object is apple.

Optionally, before the displaying the category of the first target object and one or more parameters of the target parameter on the touchscreen, the method further includes:
reminding the user to input mass of the first target object; detecting a third operation that the user inputs the mass of the first target object; and determining the mass of the first target object in response to the third operation.

For example, as shown in (b) in FIG. 8A and FIG. 8B, the mobile phone may remind the user on the touchscreen of "Input the mass of the to-be-measured food". After detecting that the user inputs the mass "68 g" of the first target object, and detecting an operation that the user taps the control 802, the mobile phone may determine that the mass of the first target object is 68 g.

It may be understood that to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to the embodiments, but it should not be considered that the implementation goes beyond the scope of the embodiments of this application.

In the embodiments, function modules of the electronic device may be divided based on the foregoing method example. For example, each function module may be divided according to each function, or two or more functions may be integrated into one processing module. The integrated module may be implemented in a form of hardware. It should be noted that, in this embodiment, module division is exemplary, and is merely a logical function division. In actual implementation, another division manner may be used.

When function modules are obtained through division by using corresponding functions, FIG. 26 is a schematic diagram of possible composition of an electronic device 2600 related to the foregoing embodiment. As shown in FIG. 26, the electronic device 2600 may include a detection unit 2601, a collection unit 2602, a processing unit 2603, and a display unit 2304.

The detection unit 2601 may be configured to support the electronic device 2600 in performing step 2401, step 2501, and/or another process used for a technology described in this specification.

The collection unit 2602 may be configured to support the electronic device 2600 in performing step 2402, step 2502, and/or another process used for a technology described in this specification.

The processing unit 2603 may be configured to support the electronic device 2600 in performing step 2403, step 2404, and/or another process used for a technology described in this specification.

It should be noted that, all related content of the steps in the foregoing method embodiment can be cited in function descriptions of corresponding function modules, and details are not described herein again.

The electronic device provided in this embodiment is configured to perform the method for estimating an object parameter. Effects that are the same as those of the foregoing implementation method can be achieved.

When an integrated unit is used, the electronic device may include a processing module, a storage module, and a communications module. The processing module may be configured to control and manage actions of the electronic device, for example, may be configured to support the electronic device in performing the steps performed by the detection unit 2601, the collection unit 2602, the processing unit 2603, and the display unit 2304. The storage module may be configured to store program code, data, and the like. The communications module may be configured to support communication between the electronic device and another device.

The processing module may be a processor or a controller. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor (DSP) and a microprocessor. The storage module may be a memory. The communications module may be specifically a device that interacts with another electronic device, for example, a radio frequency circuit, a Bluetooth chip, or a Wi-Fi chip.

In an embodiment, when the processing module is a processor and the storage module is a memory, the electronic device in this embodiment may be a device having the structure shown in FIG. 1A and FIG. 1B.

This embodiment further provides a computer storage medium. The computer storage medium stores a computer instruction, and when the computer instruction runs on an electronic device, the electronic device is enabled to perform the related method steps, to implement the method for estimating an object parameter in the foregoing embodiment.

This embodiment further provides a computer program product. When the computer program product runs on a computer, the computer is enabled to perform the related steps, to implement the method for estimating an object parameter in the foregoing embodiment.

In addition, an embodiment of this application further provides an apparatus. The apparatus may be specifically a chip, a component, or a module. The apparatus may include a processor and a memory that are connected. The memory is configured to store a computer executable instruction, and when the apparatus runs, the processor may execute the computer executable instruction stored in the memory, so that the chip performs the method for estimating an object parameter in the foregoing method embodiments.

The electronic device, the computer storage medium, the computer program product, or the chip provided in the embodiments may be configured to perform the corresponding method provided above. Therefore, for beneficial effects that can be achieved, refer to the beneficial effects of the corresponding method provided above. Details are not described herein again.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above.

For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

## Claims

1. A method for estimating an object parameter, applied to a mobile phone having a touchscreen and a camera, wherein the method comprises:
detecting a first operation of a user (2401, 2501);
starting the camera to collect a plurality of target objects in an image collected by the camera in response to the first operation, wherein the plurality of target objects comprises a first target object and a second target object (2402, 2502);
determining a category of each of the plurality of target objects, wherein the first target object has a first category and the second target object has a second category (2403), wherein a category of a target object is determined from the image collected by the camera through inputting the image into a deep learning network and extracting a feature in the image collected by the camera and comparing the feature in the image collected by the camera with features of an object of a known category stored in the deep learning network and determining a known category that has a feature of an object closest to the feature extracted in the image collected by the camera, and wherein the determined known category is the determined category of the target object,
determining a target parameter of the plurality of target objects based on the category and second information of the plurality of target objects (2404), wherein the target parameter comprises a detected parameter, and the detected parameter comprises mass, calories, or nutrient elements, and a first detected parameter of the first target object is different from a second detected parameter of the second target object, when the categories of the first and second target object are different, and wherein the second information is a depth of the plurality of target objects and an area of the plurality of target objects in the image collected by the camera wherein the depth of the plurality of target objects is a distance from the camera to the plurality of target objects when the camera collected the image, or the second information is mass of the plurality of target objects; and
displaying the target parameter of the plurality of target objects on the touchscreen (2405, 2505); and wherein
the depth of the plurality of target objects is determined by one or more of:
determining the depth by using a parallax of a multi-view camera, of the mobile phone;
determining the depth by using an automatic focus (automatic focus, AF) camera of the mobile phone;
determining the depth by performing laser ranging by using a sensor of the mobile phone;
determining the depth by using a time of flight (time of flight, TOF) of the camera of the mobile phone; and
determining the depth by using structured light of the camera of the mobile phone.

2. The method according to claim 1, wherein the determining a target parameter of the plurality of target objects based on the category and second information of the plurality of target objects comprises:
determining, by using pre-stored information or a pre-stored augmented reality, AR, model, the target parameter that matches the category and the second information of the plurality of target objects.

3. The method according to any of claims 1 to 2, wherein the pre-stored information is a mapping relationship, and before the determining a target parameter of the plurality of target objects, the method further comprises:
determining a correspondence among a category, an area, a depth, and a parameter of a plurality of objects; and
determining the mapping relationship based on the correspondence among the category, the area, the depth, and the parameter of the plurality of objects.

4. The method according to any one of claims 1 to 3, wherein the method further comprises:
determining the area of the plurality of target objects based on a heat map of the plurality of target objects.

5. The method according to claim 1, wherein the method further comprises:
reminding the user to input mass of the plurality of target objects;
detecting a second operation that the user inputs the mass of the plurality of target objects; and
determining the mass of the plurality of target objects in response to the second operation.

6. The method according to any one of claims 1 to 5, wherein the determining a target parameter of the plurality of target objects, wherein the first target object is a first category, the method further comprises:
reminding the user to determine whether the first category is accurate;
when it is detected that the user determines that the first category is inaccurate, reminding the user to input the category of the first target object;
detecting a third operation that the user inputs a third category of the first target object; and
determining the third category as the category of the first target object in response to the third operation.

7. The method according to any one of claims 1 to 6, wherein displaying the target parameter of the plurality of target objects on the touchscreen comprises:
displaying the target parameter for the plurality of target objects respectively on the touchscreen when a corresponding target object is switched to be detected.

8. A mobile phone, comprising a touchscreen, a memory, one or more processors, a plurality of applications, and one or more programs, wherein the one or more programs are stored in the memory, and when the one or more processors execute the one or more programs, the electronic device is enabled to implement the method for estimating an object parameter according to any one of claims 1 to 7.

9. A computer storage medium, comprising a computer instruction, wherein when the computer instruction runs on a mobile phone, the electronic device is enabled to perform the method for estimating an object parameter according to any one of claims 1 to 7.

10. A computer program product, wherein when the computer program product runs on a computer, the computer is enabled to perform the method for estimating an object parameter according to any one of claims 1 to 7.

## Patentansprüche

1. Verfahren zum Schätzen eines Objektparameters, angewendet auf ein Mobiltelefon mit einem Berührungsbildschirm und einer Kamera, wobei das Verfahren Folgendes umfasst:
Detektieren eines ersten Bedienvorgang eines Benutzers (2401, 2501);
Starten der Kamera, um mehrere Zielobjekte in einem durch die Kamera als Reaktion auf den ersten Bedienvorgang erfassten Bild zu erfassen, wobei die mehreren Zielobjekte ein erstes Zielobjekt und ein zweites Zielobjekt umfassen (2402, 2502);
Bestimmen einer Kategorie jedes der mehreren Zielobjekte, wobei das erste Zielobjekt eine erste Kategorie aufweist und das zweite Zielobjekt eine zweite Kategorie aufweist (2403), wobei eine Kategorie des Zielobjekts anhand des durch die Kamera erfassten Bilds bestimmt wird durch Eingeben des Bilds in ein "Deep-Learning"-Netz und Extrahieren eines Merkmals in dem durch die Kamera erfassten Bild und Vergleichen des Merkmals in dem durch die Kamera erfassten Bild mit Merkmalen eines in dem "Deep-Learning"-Netz gespeicherten Objekts einer bekannten Kategorie und Bestimmen einer bekannten Kategorie, die ein Merkmal eines Objekts aufweist, das dem in dem durch die Kamera erfassten Bild extrahierten Merkmal am nächsten ist, und wobei die bestimmte bekannte Kategorie die bestimmte Kategorie des Zielobjekts ist,
Bestimmen eines Zielparameters der mehreren Zielobjekte basierend auf der Kategorie und zweiten Informationen der mehreren Zielobjekte (2404), wobei der Zielparameter einen detektierten Parameter umfasst und der detektierte Parameter Masse-, Kalorien- oder Nährstoffelemente umfasst und sich ein erster detektierter Parameter des ersten Zielobjekts von einem zweiten detektieren Parameter des zweiten Zielobjekts unterscheidet, wenn sich die Kategorien des ersten und des zweiten Zielobjekts unterscheiden, und wobei es sich bei den zweiten Informationen um eine Tiefe der mehreren Zielobjekte und eine Fläche der mehreren Zielobjekte in dem durch die Kamera erfassten Bild handelt, wobei die Tiefe der mehreren Zielobjekte eine Distanz von der Kamera zu den mehreren Zielobjekten bei Erfassung des Bilds durch die Kamera ist, oder es sich bei den zweiten Informationen um eine Masse der mehreren Zielobjekte handelt; und
Anzeigen des Zielparameters der mehreren Zielobjekte auf dem Berührungsbildschirm (2405, 2505); und wobei
die Tiefe der mehreren Zielobjekte durch eines oder mehrere der Folgenden bestimmt wird:
Bestimmen der Tiefe unter Verwendung einer Parallaxe einer Mehrfachansichtskamera des Mobiltelefons;
Bestimmen der Tiefe unter Verwendung einer Kamera mit automatischem Fokus (Automatic Focus, AF) des Mobiltelefons;
Bestimmen der Tiefe durch Durchführen einer Laserentfernungsmessung unter Verwendung eines Sensors des Mobiltelefons;
Bestimmen der Tiefe unter Verwendung einer Flugzeit (Time Of Flight, TOF) der Kamera des Mobiltelefons; und
Bestimmen der Tiefe unter Verwendung von strukturiertem Licht der Kamera des Mobiltelefons.

2. Verfahren nach Anspruch 1, wobei das Bestimmen eines Zielparameters der mehreren Zielobjekte basierend auf der Kategorie und zweiten Informationen der mehreren Zielobjekte Folgendes umfasst:
Bestimmen, unter Verwendung vorab gespeicherter Informationen oder eines vorab gespeicherten "Augmented-Reality"- bzw. AR-Modells, des Zielparameters, der mit der Kategorie und den zweiten Informationen der mehreren Zielobjekte übereinstimmt.

3. Verfahren nach einem der Ansprüche 1 bis 2, wobei es sich bei den vorab gespeicherten Informationen um eine Abbildungsbeziehung handelt und das Verfahren vor dem Bestimmen eines Zielparameters der mehreren Zielobjekte ferner Folgendes umfasst:
Bestimmen einer Entsprechung zwischen einer Kategorie, einer Fläche, einer Tiefe und einem Parameter von mehreren Objekten; und
Bestimmen der Abbildungsbeziehung basierend auf der Entsprechung zwischen der Kategorie, der Fläche, der Tiefe und dem Parameter der mehreren Objekte.

4. Verfahren nach einem der Ansprüche 1 bis 3, wobei das Verfahren ferner Folgendes umfasst:
Bestimmen der Fläche der mehreren Zielobjekte basierend auf einer "Heatmap" der mehreren Zielobjekte.

5. Verfahren nach Anspruch 1, wobei das Verfahren ferner Folgendes umfasst:
den Benutzer daran zu erinnern, eine Masse der mehreren Zielobjekte einzugeben;
Detektieren eines zweiten Bedienvorgangs, mit dem der Benutzer die Masse der mehreren Zielobjekte eingibt; und
Bestimmen der Masse der mehreren Zielobjekte als Reaktion auf den zweiten Bedienvorgang.

6. Verfahren nach einem der Ansprüche 1 bis 5, wobei das Bestimmen eines Zielparameters der mehreren Zielobjekte, wobei das erste Zielobjekt eine erste Kategorie ist, das Verfahren ferner Folgendes umfasst:
den Benutzer daran zu erinnern, zu bestimmen, ob die erste Kategorie korrekt ist;
wenn detektiert wird, dass der Benutzer bestimmt, dass die erste Kategorie inkorrekt ist, den Benutzer daran zu erinnern, die Kategorie des ersten Zielobjekts einzugeben;
Detektieren eines dritten Bedienvorgangs, mit dem der Benutzer eine dritte Kategorie des ersten Zielobjekts eingibt; und
Bestimmen der dritten Kategorie als die Kategorie des ersten Zielobjekts als Reaktion auf den dritten Bedienvorgang.

7. Verfahren nach einem der Ansprüche 1 bis 6, wobei das Anzeigen des Zielparameters der mehreren Zielobjekte auf dem Berührungsbildschirm Folgendes umfasst:
Anzeigen des Zielparameters jeweils für die mehreren Zielobjekte auf dem Berührungsbildschirm, wenn ein entsprechendes Zielobjekt zum Detektieren umgeschaltet wird.

8. Mobiltelefon, das einen Berührungsbildschirm, einen Speicher, einen oder mehrere Prozessoren und mehrere Anwendungen und ein oder mehrere Programme umfasst, wobei das eine oder die mehreren Programme in dem Speicher gespeichert sind und eine Ausführung des einen oder der mehreren Programme durch den einen oder die mehreren Prozessoren ermöglicht, dass die elektronische Vorrichtung das Verfahren zum Schätzen eines Objektparameters nach einem der Ansprüche 1 bis 7 implementiert.

9. Computerspeichermedium, das eine Computeranweisung umfasst, wobei eine Ausführung der Computeranweisung auf einem Mobiltelefon ermöglicht, dass die elektronische Vorrichtung das Verfahren zum Schätzen eines Objektparameters nach einem der Ansprüche 1 bis 7 durchführt.

10. Computerprogrammprodukt, wobei eine Ausführung des Computerprogrammprodukts auf einem Computer ermöglicht, dass der Computer das Verfahren zum Schätzen eines Objektparameters nach einem der Ansprüche 1 bis 7 durchführt.

## Revendications

1. Procédé pour estimer un paramètre d'objet, appliqué sur un téléphone mobile comportant un écran tactile et une caméra, dans lequel le procédé comprend :
la détection d'une première opération d'un utilisateur (2401, 2501) ;
le démarrage de la caméra pour collecter une pluralité d'objets cibles dans une image collectée par la caméra en réponse à la première opération, dans lequel la pluralité d'objets cibles comprend un premier objet cible et un second objet cible (2402, 2502) ;
la détermination d'une catégorie de chacun de la pluralité d'objets cibles, dans lequel le premier objet cible relève d'une première catégorie et le second objet cible relève d'une deuxième catégorie (2403), dans lequel une catégorie d'un objet cible est déterminée à partir de l'image collectée par la caméra par l'intermédiaire de l'entrée de l'image à l'intérieur d'un réseau d'apprentissage profond et de l'extraction d'une caractéristique dans l'image collectée par la caméra et de la comparaison de la caractéristique dans l'image collectée par la caméra avec des caractéristiques d'un objet d'une catégorie connue stockée dans le réseau d'apprentissage profond et de la détermination d'une catégorie connue qui présente une caractéristique d'un objet la plus proche de la caractéristique extraite dans l'image collectée par la caméra, dans lequel la catégorie connue déterminée est la catégorie déterminée de l'objet cible ;
la détermination d'un paramètre cible de la pluralité d'objets cibles sur la base de la catégorie et d'une seconde information de la pluralité d'objets cibles (2404), dans lequel le paramètre cible comprend un paramètre détecté, et le paramètre détecté comprend une masse, des calories ou des éléments nutritifs, et un premier paramètre détecté du premier objet cible est différent d'un second paramètre détecté du second objet cible, dans lequel les catégories des premier et second objets cibles sont différentes, et dans lequel la seconde information est une profondeur de la pluralité d'objets cibles et une aire de la pluralité d'objets cibles dans l'image collectée par la caméra, dans lequel la profondeur de la pluralité d'objets cibles est une distance depuis la caméra jusqu'à la pluralité d'objets cibles lorsque la caméra a collecté l'image, ou la seconde information est une masse de la pluralité d'objets cibles ;
l'affichage du paramètre cible de la pluralité d'objets cibles sur l'écran tactile (2405, 2505) ; et dans lequel la profondeur de la pluralité d'objets cibles est déterminée au moyen d'une ou de plusieurs des déterminations suivantes :
la détermination de la profondeur en utilisant une parallaxe d'une caméra à multiples vues du téléphone mobile ;
la détermination de la profondeur en utilisant une caméra à focalisation automatique (focalisation automatique, AF) du téléphone mobile ;
la détermination de la profondeur en réalisant une télémétrie au laser en utilisant un capteur du téléphone mobile ;
la détermination de la profondeur en utilisant un temps de vol (temps de vol, TOF) de la caméra du téléphone mobile ; et
la détermination de la profondeur en utilisant une lumière structurée de la caméra du téléphone mobile.

2. Procédé selon la revendication 1, dans lequel la détermination d'un paramètre cible de la pluralité d'objets cibles sur la base de la catégorie et de la seconde information de la pluralité d'objets cibles comprend :
la détermination, en utilisant une information pré-stockée ou un modèle de réalité augmentée, AR, pré-stockée, du paramètre cible qui est en accord avec la catégorie et
la seconde information de la pluralité d'objets cibles.

3. Procédé selon l'une quelconque des revendications 1 et 2, dans lequel l'information pré-stockée est une relation de cartographie, et avant la détermination d'un paramètre cible de la pluralité d'objets cibles, le procédé comprend en outre :
la détermination d'une correspondance entre une catégorie, une aire, une profondeur et un paramètre d'une pluralité d'objets ; et
la détermination de la relation de cartographie sur la base de la correspondance parmi la catégorie, l'aire, la profondeur et le paramètre de la pluralité d'objets.

4. Procédé selon l'une quelconque des revendications 1 à 3, dans lequel le procédé comprend en outre :
la détermination de l'aire de la pluralité d'objets cibles sur la base d'une carte thermique de la pluralité d'objets cibles.

5. Procédé selon la revendication 1, dans lequel le procédé comprend en outre :
le rappel à l'utilisateur d'entrer une masse de la pluralité d'objets cibles ;
la détection d'une deuxième opération selon laquelle l'utilisateur entre la masse de la pluralité d'objets cibles ; et
la détermination de la masse de la pluralité d'objets cibles en réponse à la deuxième opération.

6. Procédé selon l'une quelconque des revendications 1 à 5, dans lequel la détermination d'un paramètre cible de la pluralité d'objets cibles, le premier objet cible relevant d'une première catégorie, le procédé comprend en outre :
le rappel à l'utilisateur de déterminer si la première catégorie est précise ;
lorsqu'il est détecté que l'utilisateur détermine que la première catégorie est imprécise, le rappel à l'utilisateur d'entrer la catégorie du premier objet cible ;
la détection d'une troisième opération selon laquelle l'utilisateur entre une troisième catégorie du premier objet cible ; et
la détermination de la troisième catégorie en tant que catégorie du premier objet cible en réponse à la troisième opération.

7. Procédé selon l'une quelconque des revendications 1 à 6, dans lequel l'affichage du paramètre cible de la pluralité d'objets cibles sur l'écran tactile comprend :
l'affichage du paramètre cible pour respectivement la pluralité d'objets cibles sur l'écran tactile lorsqu'un objet cible correspondant est commuté pour être détecté.

8. Téléphone mobile, comprenant un écran tactile, une mémoire, un ou plusieurs processeurs, une pluralité d'applications et un ou plusieurs programmes, dans lequel les un ou plusieurs programmes sont stockés dans la mémoire, et lorsque les un ou plusieurs processeurs exécutent les un ou plusieurs programmes, le dispositif électronique est autorisé à mettre en oeuvre le procédé pour estimer un paramètre d'objet selon l'une quelconque des revendications 1 à 7.

9. Support de stockage informatique, comprenant une instruction informatique, dans lequel, lorsque l'instruction informatique est exécutée sur un téléphone mobile, le dispositif électronique est autorisé à réaliser le procédé pour estimer un paramètre d'objet selon l'une quelconque des revendications 1 à 7.

10. Progiciel, dans lequel, lorsque le progiciel est exécuté sur un ordinateur, l'ordinateur est autorisé à réaliser le procédé pour estimer un paramètre d'objet selon l'une quelconque des revendications 1 à 7.
